(19) Europäisches Patentamt
European Patent Office
Office européen des brevets

(11) EP 1 801 664 B1

(12) **EUROPEAN PATENT SPECIFICATION**

(45) Date of publication and mention of the grant of the patent:
**12.11.2008 Bulletin 2008/46**

(51) Int Cl.:
***G03G 21/00*** *(2006.01)*

(21) Application number: **06025865.4**

(22) Date of filing: **13.12.2006**

(54) **Cleaning blade for use in image-forming apparatus**

Cleaning Blade zum Gebrauch in bilderzeugenden Vorrichtungen

Lame de nettoyage pour appareils de formation d'images

(84) Designated Contracting States:
**FR GB**

(30) Priority: **20.12.2005 JP 2005367183**
**28.09.2006 JP 2006264373**
**06.12.2006 JP 2006329930**

(43) Date of publication of application:
**27.06.2007 Bulletin 2007/26**

(73) Proprietor: **Sumitomo Rubber Industries, Ltd.**
**Kobe-shi,**
**Hyogo-ken (JP)**

(72) Inventor: **Sugimoto, Mutsuki**
**c/o SRI Res. & Development Ldt.**
**Kobe-shi**
**Hyogo (JP)**

(74) Representative: **Manitz, Finsterwald & Partner GbR**
**Postfach 31 02 20**
**80102 München (DE)**

(56) References cited:
**JP-A- 9 160 380**
**JP-A- 2003 248 404**
**JP-A- 2005 047 174**
**US-A- 6 043 308**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Field of the Invention

The present invention relates to a cleaning blade for use in an image-forming apparatus and more particularly to a cleaning blade formed by molding a thermosetting elastomer composition containing a rubber component and a filler mixed thereinto.

In an electrostatic photocopying machine in which ordinary paper is used as recording paper, a copying operation is performed as follows: an electrostatic charge is applied to the surface of a photoreceptor by discharge, an image is exposed to the photoreceptor to form an electrostatic latent image thereon, toner having an opposite polarity is attached to the electrostatic latent image to develop the electrostatic latent image, a toner image is transferred to recording paper, and the recording paper to which the toner image has been transferred is heated under pressure to fix the toner to the recording paper. Therefore to sequentially copy the image of an original document on a plurality of sheets of recording paper, it is necessary to remove the toner which has remained on the surface of the photoreceptor after the toner image is transferred to the recording paper from the photoreceptor in the above-described processes. As a method of removing the toner, a cleaning method of sliding a cleaning blade in contact with the surface of the photoreceptor, with the cleaning blade being pressed against the surface of the photoreceptor is known.

The conventional cleaning blade for use in the image-forming apparatus used in the above-described method is composed of polyurethane rubber to clean pulverized toner or deformed polymerized toner on the photoreceptor. The cleaning blade composed of the urethane rubber has a low heat resistance, and thus its edge having an important role for cleaning the toner becomes incapable of removing the toner because the edge wears and is rounded. The conventional cleaning blade composed of the urethane rubber is capable of cleaning the conventional pulverized toner or the deformed polymerized toner, even though the pressure (hereinafter referred to as line pressure) at the contact portion between the cleaning blade and the photoreceptor is low. Such being the case, a material having a wear resistance superior to that of the polyurethane rubber has not been developed.

The present tendency is to save energy, reduce the cost of the image-forming apparatus, and form a high-quality image. That being the case, spherical polymerized toner having a small diameter has been developed. As a result, unless the line pressure of the cleaning blade is increased, it is difficult to remove toner that has remained on the surface of the photoreceptor. Thereby the toner is apt to be cleaned faultily. When the pressure at the contact portion between the cleaning blade composed of the polyurethane rubber and the photoreceptor is increased, the frictional force becomes large. Thereby the edge of the cleaning blade wears excessively and it is difficult to increase the line pressure in the case of the cleaning blade composed of the polyurethane rubber.

To solve the above-described problem that the cleaning blade composed of the polyurethane rubber has a low heat resistance and an inferior mechanical property in a high-temperature region, the cleaning blade composed of the polymer alloy composed of hydrogenated nitrile rubber and zinc dimethacrylate finely dispersed therein is proposed and disclosed in Japanese Patent Application Laid-Open No.2003-248404 (patent document 1). Description is made in the specification of the patent document 1 that by coating both surfaces of the cleaning blade with a stainless steel foil, it is possible to improve the mold release characteristic and the tensile modulus of elasticity.

But the cleaning blade disclosed in the patent document 1 is composed of unvulcanized rubber not having rubber elasticity. Thus when the rubber composition is molded into the cleaning blade, fine irregularities are formed on the surface thereof. The fine irregularities adversely affect the cleaning performance of the cleaning blade. Wear causes the stainless steel foil coating both surfaces of the cleaning blade to peel off. The surface of the photoreceptor is damaged by particles of the stainless steel foil.

In the patent document 1, the amount of the zinc dimethacrylate finely dispersed in the hydrogenated nitrile rubber is not specified. It is impossible to obtain a cleaning blade having an appropriate property if the amount of the zinc dimethacrylate is inappropriate.

Patent Document 1
Japanese Patent Application Laid-Open No.2003-248404

JP-09-160,380 discloses a developing blade consisting of an elastomer composition containing 100 parts by weight of elastomer, such as acrylonitrile butadiene rubber, styrene-butadiene rubber or the like, 5 to 200 parts by weight of a filler and 0.1 to 10 parts by weight of a crosslinking agent.

JP 2005-047,174 describes a method for producing semiconductive rubber members, wherein the rubber member contains a polyether elastomer having vinyl groups, sulfur, a di-, tri- or tetrasulfide compound and zinc oxide.

US 6,043,308 discloses a conductive rubber composition containing a vulcanizate of a first rubber component, a vulcanizate of a second rubber component and conductive particles, wherein the first rubber component is selected from the group consisting of epichlorohydrin rubber, epichlorohydrin-ethylene oxide rubber, epichlorohydrin propylene

oxide rubber and epoxy group containing acrylic rubber.

## SUMMARY OF THE INVENTION

The present invention has been made in view of the above-described problems. Therefore it is an object of the present invention to provide a cleaning blade allowed to have an enhanced mechanical property and an improved performance in cleaning spherical polymerized toners having small diameters by improving a wear resistance of an edge thereof.

To solve the above-described problems, the present invention provides a cleaning blade, for use in an image-forming apparatus, which is formed by molding a thermosetting elastomer composition of any one of the following (A), (B), (C), and (D) each containing acrylonitrile-butadiene rubber as a rubber component (1) thereof and at least one of zinc diacrylate, zinc dimethacrylate, methacrylic acid, zinc oxide, and magnesium oxide as a filler (2) thereof:

(A): a thermosetting elastomer composition in which as the filler (2), 5 parts by mass to 60 parts by mass of the zinc dimethacrylate (2a) or a mixture (2a) of the methacrylic acid and the zinc oxide is mixed with 100 parts by mass of the rubber component (1),

(B): a thermosetting elastomer composition comprising hydrogenated acrylonitrile-butadiene rubber (1a), in which the zinc dimethacrylate is dispersed as the filler (2), included at 10 to 75 parts by mass in 100 parts by mass of the rubber component (1),

(C): a thermosetting elastomer composition in which an acrylonitrile-butadiene rubber into which a carboxylic group is introduced or a hydrogenated acrylonitrile-butadiene rubber into which the carboxylic group is introduced is included at 40 to 100 parts by mass in 100 parts by mass of the rubber component (1), and 0.1 to 20 parts by mass of the zinc oxide or the magnesium oxide is mixed with 100 parts by mass of the rubber component (1) as the filler (2), and

(D): a thermosetting elastomer composition comprising hydrogenated acrylonitrile-butadiene rubber (1b), into which the zinc diacrylate is introduced as the filler (2), included at 5 to 60 parts by mass in 100 parts by mass of the rubber component (1).

By using the above-described thermosetting elastomer composition (A) in which as the filler (2), 5 parts by mass to 60 parts by mass of the zinc dimethacrylate (2a) or the mixture (2a) of the methacrylic acid and the zinc oxide is mixed with 100 parts by mass of the rubber component (1), the zinc dimethacrylate functioning as a co-crosslinking agent makes a graft polymerization reaction at a crosslinking time to form a fine structure. The resulting thermosetting elastomer composition has a higher mechanical property and a higher wear resistance than the conventional thermosetting elastomer composition reinforced with carbon black.

When the mixture of the methacrylic acid and the zinc oxide is mixed with the rubber component (1) instead of mixing the zinc dimethacrylate therewith, the zinc dimethacrylate formed in the elastomer composition can be functioned as the co-crosslinking agent.

In mixing the mixture of the methacrylic acid and the zinc oxide with the rubber component (1), it is preferable to set the mixing ratio of the methacrylic acid to the zinc oxide to 2:1. But the methacrylic acid does not always react with the zinc oxide. Thus it is normal to set the mixing ratio of the methacrylic acid to the zinc oxide to 1:1. The total mixing amount of the mixture of the methacrylic acid and the zinc oxide is set to five to 60 parts by mass with respect to 100 parts by mass of the rubber component (1).

The reason five to 60 parts by mass of the zinc dimethacrylate or the mixture of the methacrylic acid and the zinc oxide is mixed with 100 parts by mass of the rubber component (1) is as follows: When less than five parts by mass of the zinc dimethacrylate or the mixture of the methacrylic acid and the zinc oxide is mixed with 100 parts by mass of the rubber component (1), the co-crosslinking effect of the zinc dimethacrylate is not displayed. Thus there is a fear that the resulting thermosetting elastomer composition has an inferior mechanical property and an excessive wear. On the other hand, when more than 60 parts by mass of the zinc dimethacrylate or the mixture of the methacrylic acid and the zinc oxide is mixed with 100 parts by mass of the rubber component (1), i.e., when an excessive amount of the zinc dimethacrylate or the mixture of the methacrylic acid and the zinc oxide is mixed therewith, the elastomer composition cannot be kneaded by a rubber kneading apparatus in dependence on a case. It is preferable that five parts by mass to 50 parts by mass of the zinc dimethacrylate or the mixture of the methacrylic acid and the zinc oxide is mixed with 100 parts by mass of the rubber component (1).

Instead of molding the thermosetting elastomer composition containing the rubber component (1) with which the zinc dimethacrylate (2a) or the mixture (2a) of the methacrylic acid and the zinc oxide is mixed, the cleaning blade may be formed by molding the above-described thermosetting elastomer composition (B) containing the hydrogenated acrylonitrile-butadiene rubber (1a), in which the zinc dimethacrylate is dispersed as the filler (2), which is included at 10 to 75 parts by mass in 100 parts by mass of the rubber component (1).

That is, by finely dispersing the zinc dimethacrylate in the hydrogenated acrylonitrile-butadiene rubber (HNBR) serving as the base polymer of the rubber component (1), the finely dispersed zinc dimethacrylate makes the graft polymerization reaction at the crosslinking time to form the fine structure. Thus the resulting thermosetting elastomer composition has an enhanced mechanical property.

In the hydrogenated acrylonitrile-butadiene rubber (1a) in which the zinc dimethacrylate is dispersed, it is preferable to mix 91 parts by mass to 115 parts by mass of the zinc dimethacrylate with 100 parts by mass of the HNBR.

The reason 10 to 75 parts by mass of the rubber component (1a) consisting of the HNBR to which 91 parts by mass to 115 parts by mass of the zinc dimethacrylate is added is included at 10 to 75 parts by mass in 100 parts by mass of the rubber component (1) is as follows: When the mixing amount of the rubber component (1a) is less than 10 parts by mass, the amount of the zinc dimethacrylate with respect to 100 parts by mass of the rubber component is less than 5 parts by mass. Thereby the co-crosslinking effect of the zinc dimethacrylate is not displayed. Thus there is a fear that the mechanical property of the resulting thermosetting elastomer composition has an inferior mechanical property and an excessive wear. On the other hand, when the mixing amount of the rubber component (1a) exceeds 75 parts by mass, the mixing amount of the zinc dimethacrylate with respect to 100 parts by mass of the rubber component (1) exceeds 60 parts by mass, i.e., when the amount of the zinc dimethacrylate is excessive with respect to 100 parts by mass of the rubber component (1), there is a fear that the resulting thermosetting elastomer composition cannot be kneaded by the rubber kneading apparatus and that an unreacted substance is dispersed unfavorably or an agglomerate is generated, which adversely affects the wear resistance of the resulting thermosetting elastomer composition.

It is preferable that the mixing amount of the rubber component (1a) consisting of the HNBR, serving as the base polymer of the rubber component (1), in which the zinc dimethacrylate is finely dispersed is set to 30 parts by mass to 60 parts by mass with respect to 100 parts by mass of the rubber component (1).

It is favorable that a bound acrylonitrile amount of the HNBR is set to 21% to 46% and that a Mooney viscosity ML1+4 thereof at 100˚C is set to 20 to 160.

The reason the bound acrylonitrile amount of the HNBR serving as the base polymer of the rubber component (1) is set to 21% to 46% is as follows: When the bound acrylonitrile amount of the HNBR is less than 21%, the resulting thermosetting elastomer composition has an inferior mechanical property. On the other hand, when the bound acrylonitrile amount of the HNBR exceeds 46%, the resulting thermosetting elastomer composition has a high glass transition temperature Tg and is thus liable to have a low cleaning performance at a low temperature and humidity. It is more favorable that the bound acrylonitrile amount of the HNBR serving as the base polymer of the rubber component (1)is 21% to 44% at 100˚C.

The reason the Mooney viscosity ML1+4 of the HNBR serving as the base polymer of the rubber component (1) is 20 to 160 at 100˚C is as follows: When the Mooney viscosity ML1+4 of the HNBR at 100˚C is less than 20, the resulting thermosetting elastomer composition has a low molecular weight and a low wear resistance. When the Mooney viscosity ML1+4 of the HNBR at 100˚C exceeds 160, the resulting thermosetting elastomer composition has an excessive molecular weight distribution. Thereby it is difficult to perform kneading and molding operations.

It is more favorable that the Mooney viscosity ML1+4 of the HNBR at 100˚C is set to 40 to 150.

To obtain the hydrogenated acrylonitrile-butadiene rubber (1a) in which the zinc dimethacrylate is dispersed, after the zinc dimethacrylate is mixed with the HNBR, the zinc dimethacrylate is mixed into the HNBR and finely dispersed therein. Alternatively it is possible to mix the methacrylic acid and the zinc oxide into the HNBR and finely disperse the zinc dimethacrylate formed by mixing in the HNBR. It is possible to use a commercially available product in which the zinc dimethacrylate is finely dispersed in the HNBR.

As described above, the cleaning blade of the present invention can be formed by molding the thermosetting elastomer composition (C) in which the acrylonitrile-butadiene rubber into which the carboxylic group is introduced or the hydrogenated acrylonitrile-butadiene rubber into which the carboxylic group is introduced is included at 40 to 100 parts by mass in 100 parts by mass of the rubber component (1), and 0.1 to 20 parts by mass of the zinc oxide or the magnesium oxide is mixed with 100 parts by mass of the rubber component (1) as the filler (2) or by molding the thermosetting elastomer composition (D) comprising hydrogenated acrylonitrile-butadiene rubber (1b), into which the zinc diacrylate is introduced as the filler (2), included at 5 to 60 parts by mass in 100 parts by mass of the rubber component (1) .

In the carboxylic group-introduced acrylonitrile-butadiene rubber or/and the carboxylic group-introduced hydrogenated acrylonitrile-butadiene rubber of the thermosetting elastomer composition (C), the acrylic acid or the methacrylic acid is terpolymerized as the third component of the acrylonitrile-butadiene rubber, and the carboxylic group is introduced into the side chain or end thereof.

A chemical formula 1 shown below shows the chemical structure of the hydrogenated acrylonitrile-butadiene rubber (HNBR). A chemical formula 2 shown below shows the chemical structure of the HNBR in which the acrylic acid (R=H) or the methacrylic acid (R=$CH_3$) is terpolymerized as the third component of the HNBR to introduce the carboxylic group thereinto.

Chemical formula 1

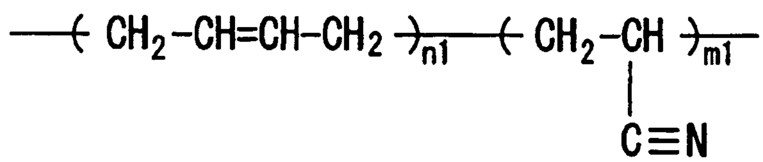

(in the chemical formula 1, n1 and m1 show integers not less than 1)

Chemical formula 2

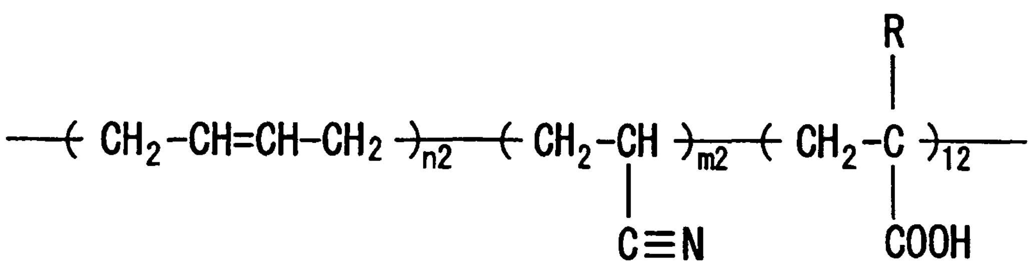

(in the chemical formula 2, n2, m2, and l2 show integers not less than 1. R shows H or methyl group ($CH_3$))

As shown in the chemical formula 2, in the carboxylic group-introduced NBR or the carboxylic group-introduced HNBR, the zinc oxide or the magnesium oxide is capable of making a ionic bonding with the carboxylic group. Further the zinc oxide (zinc ion) or the magnesium oxide (magnesium ion) which made the ionic bonding with the carboxylic group is also capable of making a ionic bonding with the carboxylic group of other main chain, thus playing a role of pseudo crosslinking. Furthermore owing to the introduction of the hydrogen bonding of the carboxylic acid, it is possible to realize the NBR or HNBR having a high strength.

In the thermosetting elastomer composition (C), the acrylonitrile-butadiene rubber into which the carboxylic group is introduced or the hydrogenated acrylonitrile-butadiene rubber into which the carboxylic group is introduced is included at 40 to 100 parts by mass in 100 parts by mass of the rubber component (1). If the acrylonitrile-butadiene rubber or/and the hydrogenated acrylonitrile-butadiene rubber into which the carboxylic group is introduced are included at below 40 parts by mass in 100 parts by mass of the rubber component (1), a crosslinking reaction is little made by the carboxylic acid. Thus there is a fear that the resulting thermosetting elastomer composition has an inferior mechanical property. It is preferable that the acrylonitrile-butadiene rubber or/and the hydrogenated acrylonitrile-butadiene rubber into which the carboxylic group is introduced are included in the range of 50 to 100 parts by mass in 100 parts by mass of the rubber component (1).

In the above-described thermosetting elastomer composition (C), as the filler (2), the zinc oxide or/and the magnesium oxide are mixed at 0.1 to 20 parts by mass with 100 parts by mass of the rubber component (1).

If the zinc oxide or/and the magnesium oxide are mixed at less than 0.1 parts by mass with 100 parts by mass

of the rubber component (1), the crosslinking reaction is not accelerated. Thus there is a fear that the resulting thermosetting elastomer composition has an inferior mechanical property. On the other hand, if the zinc oxide or/and the magnesium oxide are mixed at more than 20 parts by mass with 100 parts by mass of the rubber component (1), a reaction residue is generated. Thus there is a fear that the resulting thermosetting elastomer composition has an inferior mechanical property. It is preferable that the zinc oxide or/and the magnesium oxide are mixed at 1 to 10 parts by mass with 100 parts by mass of the rubber component (1).

In the acrylonitrile-butadiene rubber of the thermosetting elastomer composition (C) or/and the hydrogenated acrylonitrile-butadiene rubber of the thermosetting elastomer composition (C) into which the carboxylic group is introduced, the content ratio of the carboxylic group is set to favorably 0.5 to 30 mass% and more favorably 10 to 20 mass%.

If the content ratio of the carboxylic group is set to less than 0.5 mass%, a crosslinking reactivity is low. Thus there is a fear that the resulting thermosetting elastomer composition has an inferior mechanical property. On the other hand, if the content ratio of the carboxylic group is set to more than 30 mass%, the carboxylic group has an excessive reaction. Thus there is a fear that the rubber burns and the resulting thermosetting elastomer composition has an inferior mechanical property.

As the acrylonitrile-butadiene rubber into which the carboxylic group is introduced and the hydrogenated acrylonitrile-butadiene rubber of the thermosetting elastomer composition (C) into which the carboxylic group is introduced, it is possible to use a commercially available product in which copolymerization has been performed. For example, Krynac series and Therban series produced by Bayer Co., Ltd. can be used.

The above-described thermosetting elastomer composition (D) contains the hydrogenated acrylonitrile-butadiene rubber (1b) into which the zinc diacrylate is introduced in the rubber component (1). In the hydrogenated acrylonitrile-butadiene rubber (1b) into which the zinc diacrylate is introduced, the acrylic acid is terpolymerized as the third component of the acrylonitrile-butadiene rubber, as shown in a chemical formula 3 shown below.

Chemical formula 3

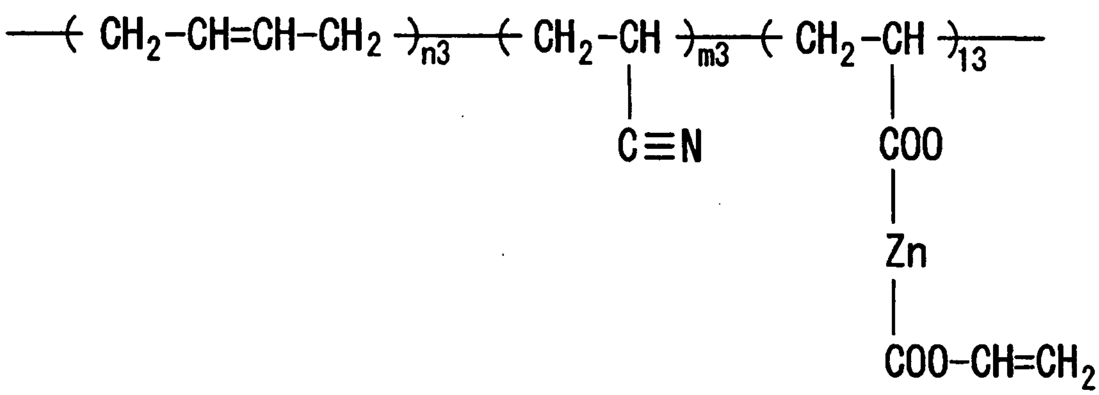

(in the chemical formula 3, n3, m3, and l3 show integers not less than 1)

As shown in the chemical formula 3, by terpolymerizing the zinc diacrylate with the hydrogenated acrylonitrile-butadiene rubber, a vinyl group arising from the acrylic acid is introduced into the side chain or the end of the hydrogenated acrylonitrile-butadiene rubber. Owing to the presence of the vinyl group, a crosslinking reaction occurs securely between the zinc diacrylate which is the third component and the NBR or the HNBR of the other main chain. Thereby the resulting thermosetting elastomer composition has an improved wear resistance.

As the acrylonitrile-butadiene rubber (1b) into which the zinc diacrylate is introduced, it is possible to use a commercially available product in which copolymerization has been performed. For example, the Therban (registered trademark) series produced by Bayer Co., Ltd. can be used.

In the thermosetting elastomer composition (D), the hydrogenated acrylonitrile-butadiene rubber (1b) into which the zinc diacrylate is introduced is included at 5 to 60 parts by mass in 100 parts by mass of the rubber component (1). If the zinc diacrylate-introduced hydrogenated acrylonitrile-butadiene rubber (1b) is included at less than 5 parts by mass in 100 parts by mass of the rubber component (1), the crosslinking reaction is not accelerated. Thus there is a fear that the resulting thermosetting elastomer composition has an inferior mechanical property. On the other hand, if the zinc

diacrylate-introduced hydrogenated acrylonitrile-butadiene rubber (1b) is included at more than 60 parts by mass in 100 parts by mass of the rubber component (1), a reaction residue is generated. Thus there is a fear that the resulting thermosetting elastomer composition has an inferior mechanical property. It is preferable that the hydrogenated acrylonitrile-butadiene rubber (1b) into which the zinc diacrylate is introduced is included at 5 to 50 parts by mass in 100 parts by mass of the rubber component (1).

In the hydrogenated acrylonitrile-butadiene rubber (1b) into which the zinc diacrylate is introduced as the filler, the zinc diacrylate is used at favorably 1 to 60 mass % and more favorably 1 to 50 mass %.

If the zinc diacrylate is contained at less than 1 mass % in the hydrogenated acrylonitrile-butadiene rubber (1b) into which the zinc diacrylate is introduced, the crosslinking reactivity is low. Thus there is a fear that the resulting thermosetting elastomer composition has an inferior mechanical property. On the other hand, if the zinc diacrylate is contained at more than 60 mass % in the hydrogenated acrylonitrile-butadiene rubber (1b) into which the zinc diacrylate is introduced, a reaction residue is generated. Thus there is a fear that the resulting thermosetting elastomer composition has an inferior mechanical property.

The thermosetting elastomer compositions (C) and (D) are different from the thermosetting elastomer compositions (A) and (B) in the following points:

The thermosetting elastomer compositions (A) and (B) contains the acrylic acid, the methacrylic acid, the metal oxide such as zinc oxide and magnesium oxide, the metal oxide of the acrylic acid, and the metal oxide of the methacrylic acid as the additive and the reinforcing agent thereof. Therefore the acrylic acid and the methacrylic acid do not react with the main chain of the NBR or the HNBR, but remains therein as an unreacted substance.

On the other hand, in the thermosetting elastomer compositions (C) and (D), the acrylic acid, the methacrylic acid or the zinc diacrylate is reacted with NBR or/and the HNBR to introduce the carboxylic group or the end vinyl group thereinto. Therefore the acrylic acid and the methacrylic acid do not remain therein as an unreacted substance.

Further the carboxylic group and the vinyl group has a positive reactivity, thus greatly improving the mechanical strength and wear resistance of the resulting thermosetting elastomer composition. Therefore by using the thermosetting elastomer compositions (C) and (D), the cleaning blade of the present invention for use in an image-forming apparatus has a low variation in its mechanical property and has hence a very high mechanical strength and wear resistance.

As the rubber component (1) used as the main component of the thermosetting elastomer composition to be molded into the cleaning blade of the present invention, in addition to the above-described acrylonitrile-butadiene rubber (NBR), it is possible to use natural rubber (NR), butadiene rubber (BR), styrene-butadiene rubber (SBR), isoprene rubber (IR), butyl rubber (IIR), chloroprene rubber (CR), acrylic rubber (ACM, ANM), epichlorohydrin rubber (ECO), ethylene propylene rubber (EPR), and ethylene-propylene-diene copolymer rubber (EPDM). These rubber components may be used singly or by mixing two or more of them with each other.

The acrylonitrile-butadiene rubber (NBR) includes acrylonitrile-butadiene rubber having a carbonyl group introduced thereinto, hydrogenated acrylonitrile-butadiene rubber (HNBR), the acrylonitrile-butadiene rubber into which the carboxylic group is introduced, the hydrogenated acrylonitrile-butadiene rubber into which the carboxylic group is introduced, the hydrogenated acrylonitrile-butadiene rubber (1a) in which the zinc dimethacrylate is dispersed as the filler (2), and the hydrogenated acrylonitrile-butadiene rubber (1b) into which the zinc diacrylate is introduced as the filler (2).

It is preferable to use the acrylonitrile-butadiene rubber (NBR) or/and the hydrogenated acrylonitrile-butadiene rubber (HNBR) as the rubber component (1) of the thermosetting elastomer compositions (A) and (B). It is especially preferable to use the hydrogenated acrylonitrile-butadiene rubber (HNBR) having residual double bonds of smaller than 10%.

As the NBR or the NBR which is used as the material of the HNBR, it is possible to use any of low-nitrile NBR having the bound acrylonitrile amount of less than 25%, intermediate-nitrile NBR having the bound acrylonitrile amount of 25% to 31%, moderate high-nitrile NBR having the bound acrylonitrile amount of 31% to 36%, high-nitrile NBR having the bound acrylonitrile amount of not less than 36%. It is preferable that the bound acrylonitrile amount of the HNBR, serving as the base polymer of the rubber component (1), in which the zinc dimethacrylate is finely dispersed is 21% to 46%, as described above.

As desired, other rubber may be combined with the acrylonitrile-butadiene rubber. As the other rubber, any of the above-exemplified rubbers can be used. When the other rubber (rubber b) is combined with the acrylonitrile-butadiene rubber (rubber a), the mixing amount of the rubber a is favorably 90 parts by mass to 50 parts by mass and more favorably 90 parts by mass to 70 parts by mass, and the mixing amount of the rubber b is favorably 10 parts by mass to 50 parts by mass and more favorably 10 parts by mass to 30 parts by mass with respect to the sum, namely, 100 parts by mass of the rubber component (1).

It is preferable that in addition to the above-described zinc dimethacrylate, the mixture of the methacrylic acid and the zinc oxide, zinc diacrylate, zinc oxide, and magnesium oxide as a filler(2), the thermosetting elastomer compositions (A) through (D) to be molded into the cleaning blade of the present invention contains one or more kinds of fillers selected from the group of fillers (2b) including a co-crosslinking agent, a vulcanization accelerator, a vulcanization-accelerating assistant, an age resistor, a softener for rubber, a reinforcing agent, and other kinds of additives as the filler (2).

It is also preferable that the thermosetting elastomer compositions (A) through (D) contain a crosslinking agent (3) such as sulfur, an organic sulfur-containing compound, an organic peroxide, a heat-resistant crosslinking agent, and a resin crosslinking agent.

The thermosetting elastomer composition to be molded into the cleaning blade essentially contains the rubber component (1), the filler (2), and the crosslinking agent (3).

It is preferable that 0.1 parts by mass to 20 parts by mass of the above-described filler (2b) other than the above-described filler (2a) is mixed with 100 parts by mass of the rubber component (1) and 0.1 parts by mass to 30 parts by mass of the crosslinking agent (3) is mixed with 100 parts by mass of the rubber component (1).

In the present invention, as described above, by mixing the predetermined amount of the zinc diacrylate, the zinc dimethacrylate, the methacrylic acid, the zinc oxide, and the magnesium oxide with the rubber component (1) as the filler (2), the co-crosslinking effect of the zinc dimethacrylate is displayed to thereby improve the mechanical property of the thermosetting elastomer composition. It is preferable to mix 0.1 parts by mass to 20 parts by mass of the filler (2b) with the rubber component (1), as described above. When the mixing amount of the filler (2b) is less than 0.1 parts by mass, the filler (2b) is not capable of providing the thermosetting elastomer composition with a reinforcing effect nor improving the mechanical property thereof. On the other hand, when the mixing amount of the filler (2b) is more than 20 parts by mass, i.e., when the filler (2b) is used in an excessive amount, the thermosetting elastomer composition is not provided with a high elastic function in its mechanical property, i.e., the thermosetting elastomer composition has a high hardness and a low tensile elongation.

The mixing amount of the crosslinking agent (3) is set to 0.1 parts by mass to 30 parts by mass for the following reason: When the mixing amount of the crosslinking agent (3) is less than 0.1 parts by mass, the vulcanizing density becomes small and there is a fear that the thermosetting elastomer composition is not provided with a desired property. On the other hand, the mixing amount of the crosslinking agent (3) exceeds 30 parts by mass, owing to an excessive crosslinking reaction, the hardness of the thermosetting elastomer composition is so high that there is a fear the cleaning blade of the present invention may damage a photoreceptor.

The co-crosslinking agent used as the above-described filler (2) crosslinks itself and reacts with rubber molecules to crosslink them, thus making the entire elastomer composition polymeric.

As the co-crosslinking agent, it is possible to use ethylene unsaturated monomers represented by methacrylate ester and metal salts of methacrylic acid or acrylic acid; polyfunctional polymers; and dioximes.

As the ethylene unsaturated monomer, the following substances are listed:

(a) Monocarboxylic acids such as acrylic acid, methacrylic acid, crotonic acid, and the like.
(b) Dicarboxylic acids such as maleic acid, fumaric acid, itaconic acid, and the like.
(c) Ester or anhydride of the above-described (a) and (b)
(d) Metal salts of the above-described (a) through (c)
(e) Aliphatic conjugated dienes such as 1,3-butadiene, isoprene, 2-chloro-1,3-butadiene, and the like
(f) Aromatic vinyl compounds such as styrene, α-methylstyrene, vinyltoluene, ethyl vinylbenzene, divinylbenzene, and the like
(g) Vinyl compounds having a heterocyclic ring such as triallyl isocyanurate, triallyl cyanurate, and vinylpyridine
(h) Vinyl cyanide compounds such as methacrylonitrile and α-chloroacrylonitrile, acrolein, formylstyrol, vinyl methyl ketone, vinyl ethyl ketone, and vinyl butyl ketone.

As the "ester of the monocarboxylic acids" of the above-described (c), the following substances are listed:

alkyl esters of methacrylic acid such as methyl methacrylate, ethyl methacrylate, n-propyl methacrylate, i-propyl methacrylate, n-butyl methacrylate, i-butyl methacrylate, n-pentyl methacrylate, i-pentyl methacrylate, n-hexyl methacrylate, cyclohexyl methacrylate, 2-ethylhexyl methacrylate, octyl methacrylate, i-nonyl methacrylate, tert-butyl cyclohexyl methacrylate, decyl methacrylate, dodecyl methacrylate, hydroxymethyl methacrylate; hydroxyethyl methacrylate

amino alkyl esters of acrylic acid such as aminoethyl acrylate, dimethylaminoethyl acrylate, butylaminoethyl acrylate, and the like;

methacrylate having an aromatic ring such as benzyl methacrylate, benzoyl methacrylate, allyl methacrylate, and the like;

methacrylate having an epoxy group such as glycidyl methacrylate, methaglycidyl methacrylate, epoxycyclohexyl methacrylate, and the like; and

methacrylate having functional groups such as N-methylolmethacrylamide, γ-methacryloxypropyltrimethoxysilane; methacrylate having a polyfunctional group such as ethylene glycol dimethacrylate, trimethylolpropane trimethacrylate, and the like.

As the "esters of dicarboxylic acids" of the above-described (c), half esters such as methyl maleate, methyl itaconate; diallyl phthalate, diallyl itaconate, and the like are listed.

As the "anhydrides of the unsaturated carboxylic acids" of the above-described (c), anhydride of acrylic acid, anhydride of maleic acid, and the like are listed.

As the "metal salts" of the above-described (d), aluminum salts, calcium salts, zinc salts, and magnesium salts of unsaturated carboxylic acids such as acrylic acid, methacrylic acid, maleic acid, and fumaric acid are listed.

As the ethylene unsaturated monomer that can be preferably used as the co-crosslinking agent in the present invention, the following substances are listed:

methacrylic acid;

higher ester of methacrylic acid such as trimethylolpropane trimethacrylate (TMPT), ethylene dimethacrylate (EDMA), polyethylene glycol dimethacrylate, cyclohexyl methacrylate, allyl methacrylate, tetrahydrofurfuryl methacrylate, and isobutylene ethylene dimethacrylate;

metal salts of methacrylic acid or acrylic acid such as aluminum acrylate, aluminum methacrylate, zinc diacrylate, zinc dimethacrylate, calcium acrylate, calcium methacrylate, magnesium acrylate, magnesium methacrylate, and the like; and

triallyl isocyanurate, triallyl cyanurate, diallyl phthalate, diallyl itaconate, vinyl toluene, vinyl pyridine, and divinylbenzene.

As the polyfunctional polymers, those utilizing the functional group of 1,2-polybutadiene are listed. More specifically, Buton 150, Buton 100, polybutadiene R-15, Diene-35, Hystal-B2000, and the like are listed.

As the above-described dioximes, p-quinonedioxime, p,p'-dibenzoyl quinonedioxime, N,N'-m-phenylenebismaleimide, and the like are listed.

In the present invention, of the above-described co-crosslinking agents, the zinc dimethacrylate is used as the main co-crosslinking agent. But other co-crosslinking agents may be used in combination with the zinc dimethacrylate.

As the vulcanization accelerator, both inorganic accelerators and organic accelerators can be used.

As the inorganic accelerator, it is possible to use slaked lime, magnesium oxide, titanium oxide, and litharge (PbO).

As the organic accelerator, thiurams, thiazoles, thioureas, dithiocarbamates, guanidines, and sulfeneamides are listed.

As the thiurams, tetramethylthiuram monosulfide, tetramethylthiuram disulfide, tetraethylthiuram disulfide, tetrabutylthiuram disulfide, and dipentamethylenethiuram tetrasulfide are listed.

As the thiazoles, it is possible to list 2-mercaptobenzothiazole, dibenzothiazyl disulfide, N-cyclohexyl benzothiazole, N-cyclohexyl-2-benzothiazolylsulfeneamide, N-oxydiethylene-2-benzothiazolylsulfeneamide, N-tert-butyl-2-benzothiazolylsulfeneamide, and N,N-dicyclohexyl-2-benzothiazolylsulfeneamide.

As the thioureas, N,N'-diethylthiourea, ethylenethiourea, and trimethylthiourea are listed.

As the salts of the dithiocarbamates, zinc dimethyl dithiocarbamate, zinc diethyl dithiocarbamate, zinc dibutyl dithiocarbamate, sodium dimethyl dithiocarbamate, sodium diethyl dithiocarbamate, copper dimethyl dithiocarbamate, ferric dimethyl dithiocarbamate (III), selenium diethyl dithiocarbamate, and tellurium diethyl dithiocarbamate are listed.

As the guanidine accelerator, it is possible to list di-o-tolyl guanidine, 1,3-diphenyl guanidine, 1-o-tolylbiguanide, and di-o-tolylbiguanide salts of dicatechol borate.

As the sulfeneamides, N-cyclohexyl-2-benzothiazolyl sulfeneamide and the like are listed.

The mixing amount of the vulcanization accelerator should be large enough to allow the property of the rubber component to be sufficiently displayed. In the present invention, the mixing amount of the vulcanization accelerator is selected in the range of 0 to 3 parts by mass with respect to 100 parts by mass of the rubber component.

The vulcanization-accelerating assistant that is used in the present invention includes metal oxides such as zinc white; fatty acids such as stearic acid, oleic acid, cotton seed fatty acid; and known vulcanization-accelerating assistants. The metal oxides such as zinc white also serve as reinforcing agents described below. As the plasticizer, compounds of phthalic acid, adipic acid, sebacic acid, benzoic acid, and the like. More specifically, dibutyl phthalate (DBP), dioctyl phthalate (DOP), tricresyl phosphate (TCP), and the like are listed.

In the present invention, the mixture of the zinc oxide and the methacrylic acid is mixed with the rubber component (1) to thereby form the zinc dimethacrylate in the rubber so that the co-crosslinking effect of the zinc dimethacrylate is displayed. But metal oxides other than the zinc oxide or metal salts can be mixed with the rubber component (1). The mixing amount of the metal oxides or the metal salts can be selected in the range from 0 to 30 parts by mass with respect

to 100 parts by mass of the rubber component (1).

The age resistor means a compounding ingredient for preventing deterioration such as oxidative deterioration, heat deterioration, ozone deterioration, and fatigue deterioration. The age resistor is classified into a primary age resistor consisting of amines and phenols; and a secondary age resistor consisting of sulfur-containing compounds and phosphites. The primary age resistor has a function of giving hydrogen to various polymer radicals and stopping a chain reaction of automatic oxidation. The secondary age resistor shows a stabilizing action by changing hydroxy peroxide into a stable alcohol.

In recent years, the cleaning blade for use in the image-forming apparatus is subjected to various environments. Therefore it is necessary to take measures for preventing the cleaning blade from aging. A polymer is destroyed by the friction between a photoreceptor and the cleaning blade. A radical generated by the destruction of the polymer accelerates an automatic oxidative reaction. Oxidative deterioration accelerates wear of the cleaning blade. Therefore it is necessary to take measures for preventing the oxidative deterioration of the cleaning blade. Because the cleaning blade is subjected to high-temperature environment, it is important to take measures for preventing thermal deterioration of the cleaning blade. Further, because ozone is generated by a charging mechanism, it is important to take measures for preventing ozone-caused deterioration of the cleaning blade. Therefore it is possible to prevent the above-described oxidative deterioration, heat deterioration, ozone deterioration, and fatigue deterioration in combination of several kinds of age resistors. It is particularly important to mix the age resistor for preventing the oxidative deterioration-caused wear of the edge of the cleaning blade into the thermosetting elastomer composition (1).

As the age resistor, amines, phenols, imidazoles, and phosphorus-containing substances, and thioureas are listed.

As the amines, phenyl-$\alpha$-naphthylamine, 2,2,4-trimethyl-1,2-dihydroquinoline polymer, 6-ethoxy-2,2,4-trimethyl-1,2-dihydroquinoline, p,p'-dioctyldiphenylamine, p,p'-dicumyldiphenylamine, N,N'-di-2-naphthyl-p-phenylenediamine, N,N'-diphenyl-p-phenylenediamine, N-phenyl-N'-isopropyl-p-phenylenediamine, and N-phenyl-N'-1,3-dimethylbutyl-p-phenylenediamine are listed.

The phenols that are used in the present invention includes 2,6-di-tert-butyl-4-methyl phenol; styrenated methyl phenol; 2,2'-methylene bis (4-ethyl-6-tert-butyl phenol); 2,2'-methylene bis (4-methyl-6-tert-butyl phenol); 4,4'-butylidene bis (3-methyl-6-tert-butyl phenol); 4,4'-thiobis (3-methyl-6-tert-butyl phenol); 2, 5-di-tert-butyl hydroquinone; and 2,5-di-tert-amyl hydroquinone. As the imidazoles, 2-mercaptobenzimidazole, zinc salts of 2-mercaptobenzimidazole, and nickel dibutyldithiocarbamate are listed.

As other age resistors, it is possible to use phosphorus-containing substances such as tris (nonyl phenyl) phosphite; thioureas such as 1,3-bis(dimethylaminopropyl)-2-thiourea, tributyl thiourea, and the like; and wax for preventing ozone-caused deterioration.

It is favorable that the mixing amount of the age resistor is set to 0.1 to 15 parts by mass with respect to 100 parts by mass of the rubber component (1). The reason the mixing amount of the age resistor is set to 0.1 to 15 parts by mass with respect to 100 parts by mass of the rubber component (1) is as follows: When the mixing amount of the age resistor is less than 0.1 parts by mass, the effect of the age resistor is not displayed. Thus there is a fear that the resulting thermosetting elastomer composition has an inferior mechanical property and an excessive wear. On the other hand, when the mixing amount of the age resistor exceeds 15 parts by mass, the age resistor is dispersed unfavorably owing to an excessive mixing amount thereof. Thereby there is a fear that the thermosetting elastomer composition has an inferior mechanical property.

It is more favorable that the mixing amount of the age resistor is set to 0.5 to 10 parts by mass with respect to 100 parts by mass of the rubber component (1).

As the softener for rubber, it is possible to use derivatives of phthalic acid, isophthalic acid, adipic acid, sebacic acid, benzoic acid, and phosphoric acid.

More specifically, it is possible to list dioctyl phthalate (DOP) such as dibutyl phthalate (DBP) and di-(2-ethylhexyl) phthalate; di-iso-octyl phthalate (DIOP), higher alcohol phthalate, di-(2-ethylhexyl) sebacate, polyester adipate, dibutyl diglycol adipate, di(butoxyethoxyethyl) adipate, iso-octyl-tall oil fatty ester, tributyl phosphate (TBP), tributoxyethyl phosphate (TBEP), tricresyl phosphate (TCP), cresyl diphenyl phosphate (CDP), and diphenyl alkane.

The mixing amount of the softener for rubber should be large enough to allow the property of the rubber component to be sufficiently displayed. The mixing amount of the softener is selected in the range of 0 to 5 parts by mass with respect to 100 parts by mass of the rubber component.

As the reinforcing agent, in addition to carbon black mainly used as a filler for guiding an interaction of the carbon black with the elastomer, it is possible to use inorganic reinforcing agents such as white carbon (silica filler such as dry silica or wet silica, silicate such as magnesium silicate), calcium carbonate, magnesium carbonate, magnesium silicate, clay (aluminum silicate), silane-modified clay, and talc; and organic reinforcing agents such as coumarone and indene resin, phenol resin, high styrene resin, and wood meal.

As the carbon black excellent in its reinforcing effect, low in cost, dispersibility, and wear resistance, it is preferable to use SAF carbon (average particle diameter: 18 to 22nm), SAF-HS carbon (average particle diameter:

about 20nm), ISAF carbon (average particle diameter: 19 to 29nm), N-339 carbon (average particle diameter: about 24nm), ISAF-LS carbon (average particle diameter: 21 to 24nm), I-ISAF-HS carbon (average particle diameter: 21 to 31nm), HAF carbon (average particle diameter: about 26 to 30nm), HAF-HS carbon (average particle diameter: 22 to 30nm), N-351 carbon (average particle diameter: about 29nm), HAF-LS carbon (average particle diameter: about 25 to 29nm), LI-HAF carbon (average particle diameter: about 29nm), MAF carbon (average particle diameter: 30 to 35nm), FEF carbon (average particle diameter: about 40 to 52nm), SRF carbon (average particle diameter: 58 to 94nm), SRF-LM carbon, and GPF carbon (average particle diameter: 49 to 84nm) are listed.

In the present invention, because the mechanical property of the thermosetting elastomer composition can be improved to a high extent owing to the co-crosslinking effect of the zinc dimethacrylate or the zinc diacrylate, the thermosetting elastomer composition does not necessarily have to contain the above-described reinforcing agent therein. But as desired, 0 to 100 parts by mass of the reinforcing agent can be mixed with 100 parts by mass of the rubber component.

As other additives, amide compounds, fatty acid, metal salts of fatty acids, and wax are listed.

As the amide compounds, aliphatic amide compounds and aromatic amide compounds are listed. As fatty acids of the aliphatic amide compounds, oleic acid, stearic acid, erucic acid, caproic acid, caprilic acid, lauryl acid, myristic acid, palmitic acid, arachidic acid, behenic acid, palmitoleic acid, eicosane acid, erucic acid, elaidic acid, trans-11-eicosane acid, trans-13-docosane acid, linolic acid, linolenic acid, and ricinoleic acid are listed. As the aliphatic amide compounds, it is preferable to use ethylene-bis-erucic acid amide, ethylene-bis-oleic acid amide, ethylene-bis-stearic acid amide, oleic acid amide, stearic acid amide, erucic acid amide, and behenic acid amide. The oleic acid amide, the stearic acid amide, and the erucic acid amide are especially preferable.

As the fatty acid, lauryl acid, stearic acid, palmitic acid, myristic acid, and oleic acid are listed. To form the metal salts of the fatty acids, the fatty acids include lauryl acid, stearic acid, palmitic acid, myristic acid, and oleic acid are listed. The metals include zinc, iron, calcium, aluminum, lithium, magnesium, strontium, barium, cerium, titanium, zirconium, lead, and manganese.

As the wax, paraffin wax, montan wax, amide wax are listed.

The mixing amount of these additives should be large enough to allow the property of the rubber component to be sufficiently displayed. In the present invention, the mixing amount of the additives with respect to 100 parts by mass of the rubber component is selected in the range of 0 to 10 parts by mass as desired.

As the crosslinking agent (3) for use in the thermosetting elastomer composition constituting the cleaning blade of the present invention, as described above, sulfur, the organic sulfur-containing compound, the organic peroxide, the heat-resistant crosslinking agent, and the resin crosslinking agent are used.

The sulfur is used by pulverizing recovered sulfur to use it in the form of fine powder. Surface-treated sulfur having improved dispersibility can be appropriately used. Insoluble sulfur can be also used to prevent it from blooming from unvulcanized rubber.

As the organic sulfur-containing compounds, N,N'-dithiobismorpholine, diphenyl disulfide, pentabromodisulfide, pentachlorothiophenol, and zinc pentachlorothiophenolate, and the like are listed.

As the organic peroxides, it is possible to list benzoyl peroxide, 1,1-di-(tert-butyl peroxy)-3,3,5-trimethylcyclohexane, 2,5-dimethyl-2,5-di-(benzoyl peroxy)hexane, 2,5-dimethyl-2,5-di-(benzoyl peroxy)-3-hexene, 2,5-dimethyl-2,5-di-(tert-butyl peroxy)hexane, di-tert-butyl peroxy-di-isopropylbenzene, di-tert-butyl peroxide, di-tert-butylperoxybenzoate, dicumyl peroxide, tert-butyl cumyl peroxide, 2,5-dimethyl-2,5-di-(tert-butyl peroxy)-3-hexene, 1,3-bis(tert-butyl peroxyisopropyl)benzene, n-butyl-4,4-bis(tert-butyl peroxy)valerate, p-chlorobenzoyl peroxide, 2,4-dichlorobenzoyl peroxide, tert-butyl peroxyisopropyl carbonate, diacetyl peroxide, lauroyl peroxide.

The heat-resistant crosslinking agent which is used in the present invention includes 1,3-bis(citraconimide methyl)benzene, hexamethylene-1,6-sodium bisthiosulfate·dihydrate, 1,6-bis(dibenzylthiocarbamoyl disulfide)hexane.

As the resin crosslinking agent, alkylphenol resin or bromized alkylphenol formaldehyde resin such as TACKROL 201 (produced by Taoka Chemical Industry Co.,Ltd.), TACKROL 250-III (produced by Taoka Chemical Industry Co.,Ltd.), and Hitanol 2501 (produced by Hitachi Chemical Co.,Ltd.) are listed.

The mixing amount of the crosslinking agent should be large enough to allow the property of the rubber component to be sufficiently displayed. The mixing amount of the crosslinking agent with respect to 100 parts by mass of the rubber component is selected in the range of 0.1 to 30 parts by mass.

The cleaning blade of the present invention composed of the thermosetting elastomer composition is obtained by mixing the above-described components with one another by using a rubber kneading apparatus such as a single-screw extruder, a 1.5-screw extruder, a twin screw extruder, an open roll, a kneader, a Banbury mixer or a heated roller.

The order of mixing the components is not specifically limited, but it is possible to supply the components to the kneading apparatus all together. It is also possible to supply a part of the components to the kneading apparatus, knead them to obtain a mixture, add remaining components to the mixture, and re-perform a kneading operation. It is preferable to carry out a method of kneading the rubber component (1) and the filler (2) to obtain a mixture, add the crosslinking agent (3) to the mixture, and thereafter re-performing a kneading operation.

The cleaning blade of the present invention for use in the image-forming apparatus is obtained by molding the thermosetting elastomer composition by using a known molding method such as compression molding or injection molding.

It is favorable that the cleaning blade of the present invention obtained in the above-described manner has a tensile strength not less than 10 MPa. If the cleaning blade has a tensile strength less than 10 MPa, the cleaning blade is frail and wears excessively. It is favorable that the tensile strength of the cleaning blade is about 20 MPa.

It is favorable that the volume swell of the cleaning blade of the present invention for use in the image-forming apparatus is not more than 200%. When the volume swell thereof is set to more than 200%, it is impossible to provide the cleaning blade with rubber elasticity. It is more favorable that the volume swell thereof is set to about 150%.

The effect of the present invention is described below. As described above, the cleaning blade of the present invention for use in an image-forming apparatus is formed by molding the thermosetting elastomer composition of any one of the following thermosetting elastomer compositions (A), (B), (C), and (D) each containing the acrylonitrile-butadiene rubber as the rubber component (1) thereof and at least one of the zinc diacrylate, the zinc dimethacrylate, the methacrylic acid, the zinc oxide, and the magnesium oxide as the filler (2) thereof. Owing to the co-crosslinking effect of the zinc dimethacrylate and the zinc diacrylate, the zinc dimethacrylate and the zinc diacrylate make the graft polymerization reaction at a crosslinking time to form the fine structure. The resulting thermosetting elastomer composition has a higher mechanical property than the conventional thermosetting elastomer composition reinforced with carbon black and an improved wear resistance. Therefore the cleaning blade of the present invention is excellent in the performance of cleaning spherical polymerized toner having a small diameter.

Because each of the thermosetting elastomer compositions (C) and (D) contains the rubber component consisting of the acrylonitrile-butadiene rubber having the thermosetting elastomer composition (C) carboxylic group and (D)the end vinyl group introduced into the side chain thereof, the side chain of the rubber component is capable of making a crosslinking reaction. Thus the cleaning blade composed of the thermosetting elastomer compositions (C) and (D) has a mechanical property and a wear resistance improved to a higher extent. Therefore the cleaning blade of the present invention is excellent in the performance of cleaning the spherical polymerized toner having a small diameter.

## BRIEF DESCRIPTION OF THE DRAWINGS

Fig. 1 is an illustrative view showing a color image-forming apparatus on which the cleaning blade of the present invention is mounted.

Fig. 2 explains a method of examining the cleaning performance in examples of the present invention.

## DETAILED DESCRIPTION OF THE PREFERRED EMBODIMENTS

The embodiment of a cleaning blade of the present invention for use in an image-forming apparatus will be described below with reference to the drawings.

Fig. 1 shows a cleaning blade 20 of the present invention and an image-forming apparatus on which the cleaning blade 20 is mounted.

The cleaning blade 20 is bonded to a supporting member 21 with an adhesive agent. The supporting member 21 is composed of a rigid metal, an elastic metal, plastic or ceramic. It is favorable that the supporting member 21 is made of metal and more favorable that it is made of chrome-free SECC.

As the adhesive agent for bonding the cleaning blade 20 and the supporting member 21 to each other, a polyamide or polyurethane hot-melt adhesive agent and an epoxy or phenol adhesive agent are used. It is preferable to use the hot-melt adhesive agent.

The color image-forming apparatus shown in Fig. 1 forms an image in processes described below:

Initially, a photoreceptor 12 rotates in the direction shown with the arrow of Fig. 1. After the photoreceptor 12 is charged by a charging roller 11, a laser 17 exposes a non-imaging portion of the photoreceptor 12 via a mirror 16, thus destaticizing the non-imaging portion. At this time, the portion of the photoreceptor 12 corresponding to an imaging portion is charged. Thereafter a toner 15a is supplied to the photoreceptor 12 and attaches to the charged imaging portion to form a first-color toner image. The toner image is transferred to an intermediate transfer belt 13 via a primary transfer roller 19a. In the same manner, a toner image of each of other color toners 15b to 15d formed on the photoreceptor 12 is transferred to the intermediate transfer belt 13. A full-color image composed of the four color toners 15a through 15d is formed on the intermediate transfer belt 13. The full-color image is transferred to a to-be-transferred material (normally, paper) 18 via a secondary transfer roller 19b. When the to-be-transferred material 18 passes between a pair of a fixing rollers 14 heated to a predetermined temperature, the full-color image

is fixed to the surface thereof.

In the above-described processes, to sequentially copy the image of an original document on a plurality of recording paper, toner which has not been transferred to the intermediate transfer belt 13 but has remained on the photoreceptor 12 is removed from the surface of the photoreceptor 12 by rubbing the photoreceptor 12 with a cleaning blade 20 pressed against the surface of the photoreceptor 12 and is collected in a toner collection box 22.

The cleaning blade 20 of the first embodiment of the present invention for use in the image-forming apparatus is formed by molding the above-described thermosetting elastomer composition (A).

The thermosetting elastomer composition (I) essentially contains the rubber component (1), the filler (2a, 2b), and the crosslinking agent (3).

As the rubber component (1), the acrylonitrile-butadiene rubber or/and the hydrogenated acrylonitrile-butadiene rubber (1a) are used.

It is preferable to use moderate high-nitrile acrylonitrile-butadiene rubber having a bound acrylonitrile amount of 31% to 36% as the acrylonitrile-butadiene rubber.

As the hydrogenated acrylonitrile-butadiene rubber, it is preferable to hydrogenate the moderate high-nitrile acrylonitrile-butadiene rubber to allow the hydrogenated acrylonitrile-butadiene rubber to have a residual double bond of not more than 10%. It is most favorable to use the hydrogenated acrylonitrile-butadiene rubber having the residual double bond of not more than 10% as the rubber component (1).

As the filler (2), the co-crosslinking agent and the age resistor are used. As the co-crosslinking agent, zinc dimethacrylate (2a) is used. The mixing amount of the zinc dimethacrylate is set to 5 parts by mass to 60 parts by mass with respect to 100 parts by mass of the rubber component (1).

As the age resistor used as other filler (2b), it is preferable to use p,p'-dicumyldiphenylamine and 2-mercaptobenzimidazole. The mixing amount of the age resistor is set to 0.1 parts by mass to 15 parts by mass with respect to 100 parts by mass of the rubber component.

The mixing amount of the crosslinking agent (3) is set to 0.5 parts by mass to 30 parts by mass with respect to 100 parts by mass of the rubber component.

As the crosslinking agent (3), a sulfur-containing compound, an organic peroxide or a resin crosslinking agent is used. These crosslinking agents may be used singly or by mixing two or more of them with each other.

As the sulfur-containing compound, it is preferable to use diphenyl disulfide. The mixing amount of the diphenyl disulfide is set to 0.1 parts by mass to 20 parts by mass with respect to 100 parts by mass of the rubber component (1).

As the organic peroxide, it is preferable to use dicumyl peroxide. The mixing amount of the organic peroxide with respect to 100 parts by mass of the rubber component is set to 0.5 parts by mass to 10 parts by mass and preferably 1 part by mass to 6 parts by mass.

As the resin crosslinking agent, it is preferable to use alkylphenol resin. The mixing amount of the resin crosslinking agent is set to 5 parts by mass to 20 parts by mass and preferably 10 parts by mass to 20 parts by mass with respect to 100 parts by mass of the rubber component.

The thermosetting elastomer composition which is used in the present invention is produced as described below:

Initially the rubber component (1) and the filler (2) are kneaded at 80 to 120°C for five to six minutes with the kneading apparatus such as the single-screw extruder, the 1.5-screw extruder, the twin screw extruder, the open roll, the kneader, the Banbury mixer, and the heated roller. If the kneading temperature is less than 80°C and the kneading period of time is less than five minutes, the rubber component (1) is insufficiently plasticized and the mixture is insufficiently kneaded. If the kneading temperature is more than 120°C and the kneading period of time is more than six minutes, there is a fear that the rubber component (1) is decomposed.

After the crosslinking agent (3) is added to the obtained mixture, they are kneaded at 80 to 90°C for five to six minutes by using the above-described kneading apparatuses. If the kneading temperature is less than 80°C and the kneading period of time is less than five minutes, the mixture is insufficiently plasticized and kneaded. If the kneading temperature is more than 90°C and the kneading period of time is more than six minutes, there is a fear that the crosslinking agent (3) is decomposed.

The cleaning blade 20 of the present invention is formed by molding the thermosetting elastomer composition obtained by carrying out the above-described method. It is preferable to mold and process the thermosetting elastomer composition into the rectangular cleaning blade 20 having a thickness of 1 to 3mm, a width of 10 to 40mm, and a length of 200 to 500mm.

The molding method is not specifically limited but a known method such as the injection molding or the compression molding can be used.

More specifically, press vulcanization is performed at 160°C to 170°C for 20 to 40 minutes, with the thermosetting elastomer composition set in a die. If the vulcanizing temperature is less than 160°C and the vulcanizing period of time

is less than 20 minutes, the thermosetting elastomer composition is not sufficiently vulcanized. If the vulcanizing temperature is more than 170˚C and the vulcanizing period of time is more than 40 minutes, there is a fear that the rubber component is decomposed.

The cleaning blade 20 obtained by carrying out the above-described method has a tensile strength of not less than 10 MPa and a volume swell of not more than 200%.

Because the cleaning blade 20 of the present invention has the above-described properties, the cleaning blade 20 is excellent in its wear resistance and in the performance of cleaning spherical polymerized toner having a small diameter.

The cleaning blade 20 of the second embodiment of the present invention for use in the image-forming apparatus is also formed by molding the above-described thermosetting elastomer composition (A) as in the case of the first embodiment.

But the cleaning blade of the second embodiment is produced in a manner similar to that of the first embodiment, except that in the second embodiment, the zinc dimethacrylate is not mixed with the rubber component (1) as the filler, but the mixture (2a) of the methacrylic acid serving as the co-crosslinking agent and the zinc oxide serving as the vulcanization-accelerating assistant is mixed with the rubber component (1).

The mixing ratio between the methacrylic acid and the zinc oxide is set to 1:1. The mixing amount of the mixture of the methacrylic acid and the zinc oxide with respect to 100 parts by mass of the rubber component is five to 60 parts by mass.

The cleaning blade 20 obtained by carrying out the above-described method has a tensile strength and a volume swell similar to those of the cleaning blade of the first embodiment and is excellent in its wear resistance and in the performance of cleaning spherical polymerized toner having a small diameter.

The cleaning blade 20 of the third embodiment of the present invention for use in the image-forming apparatus is also formed by molding the above-described thermosetting elastomer composition (B).

The cleaning blade of the third embodiment is produced in a manner similar to that of the first and second embodiments, except that in the third embodiment, the zinc dimethacrylate or the mixture of the methacrylic acid and the zinc oxide are not mixed with the rubber component (1) as the filler, but the zinc dimethacrylate finely dispersed in the HNBR serving as the base polymer of the rubber component (1) is mixed with the rubber component (1).

More specifically, as the rubber component (1), similarly to the first and second embodiments, the NBR or/and the HNBR (rubber a) are used. But 10 parts by mass to 75 parts by mass of 100 parts by mass of the rubber component (1) consists of the rubber component (1a) containing the HNBR serving as the base polymer of the rubber component (1) and the zinc dimethacrylate finely dispersed in the HNBR.

The amount of the zinc dimethacrylate which is dispersed as the above-described filler (2) in the hydrogenated acrylonitrile-butadiene rubber (1a) is set to 91 parts by mass to 110 parts by mass with respect to 100 parts by mass of the HNBR.

The bound acrylonitrile amount of the HNBR serving as the base polymer of the rubber component (1) is set to 21% to 44%. The Mooney viscosity ML1+4 of the HNBR at 100˚C is set to 40 to 150.

The cleaning blade 20 obtained by carrying out the above-described method has a tensile strength and a volume swell similar to those of the cleaning blade of the first and second embodiments and is excellent in its wear resistance and in the performance of cleaning spherical polymerized toner having a small diameter.

In the thermosetting elastomer composition the fourth embodiment, the acrylonitrile-butadiene rubber into which the carboxylic group is introduced or the hydrogenated acrylonitrile-butadiene rubber into which the carboxylic group is introduced is included at 40 to 100 parts by mass in 100 parts by mass of the rubber component (1) of the first embodiment. The acrylonitrile-butadiene rubber into which the carboxylic group is introduced or the hydrogenated acrylonitrile-butadiene rubber into which the carboxylic group is introduced is obtained by terpolymerizing the acrylic acid or the methacrylic acid with the acrylonitrile-butadiene rubber or/and the hydrogenated acrylonitrile-butadiene rubber to introduce the carboxylic group into the side chain or end thereof.

Therefore in the fourth embodiment, unlike the first through third embodiments, the zinc dimethacrylate or the mixture of the methacrylic acid and the zinc oxide is not added to the rubber component as the filler thereof, but the zinc oxide or the magnesium oxide is added thereto.

The zinc oxide or the magnesium oxide is added at 0.1 to 20 parts by mass to 100 parts by mass of the rubber component (1) .

As the crosslinking agent (3), sulfur or an organic peroxide used in the first embodiment is used. When the sulfur is used as the crosslinking agent (3), a vulcanization accelerator is used as the other filler (2b).

As the sulfur, powdery sulfur is used. As the organic peroxide, dicumyl peroxide is used.

The mixing amount of the crosslinking agent (3) is set to 0.1 to 30 parts by mass with respect to 100 parts by mass of the rubber component (1).

As the vulcanization accelerator, dibenzothiazyl disulfide and tetramethylthiuram monosulfide are used. The mixing amount of the vulcanization accelerator is set to 0.5 to 3 parts by mass with respect to 100 parts by mass of the

rubber component (1).

As the filler (2b) other than the vulcanization accelerator, stearic acid, age resistor, and carbon black are used.

The mixing amount of the stearic acid is set to 0.5 to 10 parts by mass with respect to 100 parts by mass of the rubber component (1).

As the age resistor, it is preferable to use p,p'-dicumyldiphenylamine and 2-mercaptobenzimidazole. The mixing amount of the age resistor is set to 0.1 to 15 parts by mass with respect to 100 parts by mass of the rubber component.

The cleaning blade of the fourth embodiment is formed in a manner similar to that of the first embodiment.

In the acrylonitrile-butadiene rubber of the thermosetting elastomer composition (C) into which the carboxylic group is introduced or the hydrogenated acrylonitrile-butadiene rubber of the thermosetting elastomer composition (C) into which the carboxylic group is introduced, the content ratio of the carboxylic group is set to 0.5 to 30 mass %.

In the cleaning blade 20 obtained in this manner, the carboxylic group is introduced into the side chain or end of the acrylonitrile-butadiene rubber and the hydrogenated acrylonitrile-butadiene rubber. Thus the crosslinking reaction occurs more reliably in the fourth embodiment than in the first through third embodiment. Therefore the cleaning blade of the fourth embodiment has a higher tensile strength and volume swell and is excellent in its wear resistance and in the performance of cleaning spherical polymerized toner having a small diameter.

In the fifth embodiment, the cleaning blade is formed in a manner similar to that of the fourth embodiment except that the hydrogenated acrylonitrile-butadiene rubber (1b) into which 5 to 60 parts by mass of the zinc diacrylate is introduced as the filler (2) is included in 100 parts by mass of the rubber component and is not included the zinc oxide or the magnesium oxide.

That is, five to 60 of 100 parts by mass of the rubber component (1) consists of the hydrogenated acrylonitrile-butadiene rubber (1b) into which the zinc diacrylate is introduced. Other than (1b), one or more kinds of NBR, HNBR, NBR into which a carboxylic group, HNBR into which a carboxylic group is introduced, are used as the rubber component (1).

In the hydrogenated acrylonitrile-butadiene rubber (1b) into which the zinc diacrylate is introduced as the filler, the hydrogenated acrylonitrile-butadiene rubber (1b) contains the zinc diacrylate at 1 to 60 mass %.

In the cleaning blade 20 obtained in this manner, the zinc diacrylate is introduced as the third component of the rubber component. Thus the crosslinking reaction occurs more reliably in the fifth embodiment than in the first through third embodiment. Therefore the cleaning blade of the fifth embodiment has a tensile strength and volume swell equal or similar to that of the first through third embodiment and is excellent in its wear resistance and in the performance of cleaning spherical polymerized toner having a small diameter.

• EXAMPLES

Examples of the present invention and comparison examples are described below.

Examples 1 through 18 and comparison examples 1 through 8 are shown below.

After the mixing amount of each of the rubber component (1) and the filler (2a, 2b) shown in tables 1 through 3 was measured, the rubber component (1) and the filler (2a, 2b) were supplied to a rubber kneading apparatus such as a twin screw extruder, an open roll or a Banbury mixer. Thereafter they were kneaded for five to six minutes while they were being heated at 80˚C to 120˚C.

The obtained mixture and the crosslinking agent (3) were supplied to the rubber kneading apparatus such as the open roll, the Banbury mixer or the kneader. The mixing amount of the crosslinking agent (3) is shown in tables 1 through 3. Thereafter they were kneaded for five to six minutes while they were being heated to 80˚C to 90˚C.

After the obtained rubber composition was set in a die, it was press-vulcanized at 160˚C to 170˚C for 20 to 40 minutes to obtain a sheet having a thickness of 2mm.

After a cleaning blade having a width of 27mm and a length of 320mm was cut out of the sheet having the thickness of 2mm, the cleaning blade was bonded to a supporting member made of chrome-free SECC with hot-melt made of diamond. The central portion of the sheet was cut to obtain a cleaning member.

Table 1

| | | CE1 | E1 | E2 | E3 | E4 | E5 | E6 | CE2 |
|---|---|---|---|---|---|---|---|---|---|
| Rubber component (1) | NBR (rubber a) | 100 | 100 | 100 | 100 | 100 | | 100 | 100 |
| | HNBR (rubber a) | | | | | | 100 | | |
| | ZDMA-containing HNBR-A (1a) | | | | | | | | |
| | ZDMA-containing HNBR-B (1a) | | | | | | | | |
| Filler (2a) | Zinc dimethacrylate | 4 | 5 | 15 | 30 | 40 | 40 | 60 | 65 |
| | Methacrylic acid | | | | | | | | |
| | Zinc oxide | | | | | | | | |
| Filler (2b) | Magnesium oxide | | | | | | | | |
| | Carbon black | | | | | | | | |
| | Age resistor A | | 1 | 1 | 1 | 1 | 1 | 1 | |
| | Age resistor B | | 2 | 2 | 2 | 2 | 2 | 2 | |
| Crosslinking agent (3) | Sulfur-containing compound | | 0.5 | 0.5 | 0.5 | 0.5 | 0.5 | 0.5 | |
| | Organic peroxide | 3 | 2 | 2 | 2 | 2 | 3 | 2 | 3 |
| ZDMA-containing HNBR | Content of zinc dimethacrylate (2a) | | | | | | | | |
| | Bound acrylonitrile amount | | | | | | | | |
| | Mooney viscosity ML1+4 (100˚C) | | | | | | | | |
| Mass of filler (2a) per 100 parts by mass of entire rubber component | | 4 | 5 | 15 | 30 | 40 | 40 | 60 | 65 |
| Tensile strength(MPa) | | 13 | 15 | 18 | 21 | 24 | 27 | 29 | 39 |
| Volume swell (%) | | 198 | 160 | 159 | 154 | 153 | 123 | 121 | 225 |
| Cleaning performance | | × | ○ | ○ | ○ | ◎ | ◎ | ○ | × |
| Wear resistance | | × | △ | ○ | ○ | ◎ | ◎ | ◎ | × |
| E and CE in the uppermost column indicate example and comparison example respectively. | | | | | | | | | |

Table 2

| | | CE3 | E7 | E8 | E9 | E10 | E11 | CE4 | CE5 | CE6 |
|---|---|---|---|---|---|---|---|---|---|---|
| Rubber component (1) | NBR (rubber a) | 100 | 100 | 100 | | 100 | 100 | 100 | 100 | |
| | HNBR (rubber a) | | | | 100 | | | | | 100 |
| | ZDMA-containing HNBR-A (1a) | | | | | | | | | |
| | ZDMA-containing HNBR-B (1a) | | | | | | | | | |

(continued)

| | | CE3 | E7 | E8 | E9 | E10 | E11 | CE4 | CE5 | CE6 |
|---|---|---|---|---|---|---|---|---|---|---|
| Filler (2a) | Zinc dimethacrylate | 2 | 2.5 | 10 | 10 | 20 | 30 | 35 | 10 | 10 |
| | Methacrylic acid | 2 | 2.5 | 10 | 10 | 20 | 30 | 35 | | |
| | Zinc oxide | | | | | | | | | |
| Filler (2b) | Magnesium oxide | | | | | | | | 10 | 10 |
| | Carbon black | | | | | | | | 15 | 15 |
| | Age resistor A | | 1 | 1 | 1 | 1 | 1 | | | |
| | Age resistor B | | 2 | 2 | 2 | 2 | 2 | | | |
| Crosslinking agent (3) | Sulfur-containing compound | | 0.5 | 0.5 | 0.5 | 0.5 | 0.5 | | | |
| | Organic peroxide | 3 | 2 | 2 | 3 | 2 | 2 | 3 | 3 | 3 |
| ZDMA-containing HNBR | Content of zinc dimethacrylate (2a) | | | | | | | | | |
| | Bound acrylonitrile amount | | | | | | | | | |
| | Mooney viscosity ML1+4(100˚C) | | | | | | | | | |
| Mass of filler (2a) per 100 parts by mass of entire rubber component | | 4 | 5 | 20 | 20 | 40 | 60 | 70 | 10 | 10 |
| Tensile strength(MPa) | | 16 | 17 | 22 | 11 | 15 | 15 | 32 | fracture d | 14 |
| Volume swell (%) | | 210 | 158 | 121 | 164 | 99 | 100 | 87 | 104 | 226 |
| Cleaning performance | | × | ○ | ○ | ○ | ○ | ○ | × | ○ | ○ |
| Wear resistance | | × | △ | ○ | ○ | ◎ | ◎ | × | × | × |
| E and CE in the uppermost column indicate example and comparison example respectively. | | | | | | | | | | |

Table 3

| | | CE7 | E12 | E13 | E14 | E15 | E16 | E17 | E18 | CE8 |
|---|---|---|---|---|---|---|---|---|---|---|
| Rubber component (1) | NBR (rubber a) | | | | | | | | | |
| | HNBR (rubber a) | 93 | 90 | 70 | 45 | 25 | 70 | 45 | 25 | 20 |
| | ZDMA-containing HNBR-A (1a) | 7 | 10 | 30 | 55 | 75 | | | | |
| | ZDMA-containing HNBR-B (1a) | | | | | | 30 | 55 | 75 | 80 |
| Filler (2a) | Zinc dimethacrylate | | | | | | | | | |
| | Methacrylic acid | | | | | | | | | |
| | Zinc oxide | | | | | | | | | |
| Filler (2b) | Magnesium oxide | | | | | | | | | |
| | Carbon black | | | | | | | | | |
| | Age resistor A | | 1 | 1 | 1 | 1 | 1 | 1 | 1 | 1 |
| | Age resistor B | | 2 | 2 | 2 | 2 | 2 | 2 | 2 | 2 |

(continued)

| | | CE7 | E12 | E13 | E14 | E15 | E16 | E17 | E18 | CE8 |
|---|---|---|---|---|---|---|---|---|---|---|
| Crosslinking agent (3) | Sulfur-containing compound | | 0.5 | 0.5 | 0.5 | 0.5 | 0.5 | 0.5 | 0.5 | |
| | Organic peroxide | 3 | 3 | 4.5 | 6 | 6 | 4.5 | 6 | 6 | 3 |
| ZDMA-containing HNBR | Content of zinc dimethacrylate (2a) | 3.5 | 5 | 15 | 27.5 | 37.5 | 15 | 27.5 | 37.5 | 40 |
| | Bound acrylonitrile amount | 36 | 36 | 36 | 36 | 36 | 36 | 36 | 36 | 36 |
| | Mooney viscosity ML1+4(100˚C) | 145 | 145 | 145 | 145 | 57.5 | 57.5 | 57.5 | 57.5 | 57.5 |
| Mass of filler (2a) per 100 parts by mass of entire rubber component | | 3.6 | 5.3 | 17.6 | 46.8 | 60 | 17.6 | 46.8 | 60 | 66.7 |
| Tensile strength(MPa) | | 11 | 15 | 18 | 36 | 38 | 21 | 29 | 40 | 46 |
| Volume swell(%) | | 256 | 188 | 150 | 119 | 103 | 164 | 120 | 98 | 190 |
| Cleaning performance | | × | ○ | ○ | ◎ | ◎ | ○ | ◎ | ◎ | × |
| Wear resistance | | × | ○ | ○ | ◎ | ◎ | ○ | ◎ | ◎ | × |
| E and CE in the uppermost column indicate example and comparison example respectively. | | | | | | | | | | |

The unit of each of the mixing amount of the rubber component (1), the filler (2a, 2b), and the crosslinking agent (3) shown in tables 1 through 3 is part by mass. The amount of the zinc dimethacrylate (2a) of the ZDMA-containing HNBR is the amount (part by mass) of the zinc dimethacrylate (2a) contained in the ZDMA-containing HNBR of the rubber component (1).

"Mass of filler (2a) with respect to 100 parts by mass of entire rubber component" shown in tables 1 through 3 means the sum of the fillers (2a) including the amount of the zinc dimethacrylate (2a) contained in the ZDMA-containing HNBR with respect to 100 parts by mass of the entire rubber component shown by the total mass of the rubber component other than the ZDMA-containing HNBR and the HNBR (serving as the base polymer) contained in the ZDMA-containing HNBR.

The following products were used for the components shown in tables 1 through 3:

- NBR (acrylonitrile-butadiene rubber): "N232S(commercial name)" produced by JSR Corporation (bound acrylonitrile amount: 35%)
- HNBR (hydrogenated acrylonitrile-butadiene rubber): HNBR is used as the base polymer of the rubber component (1) ("Zetpol 2010H(commercial name)" produced by Zeon Corporation, bound acrylonitrile amount: 36%, Mooney viscosity: 145).
- ZDMA-containing HNBR-A (zinc dimethacrylate was finely dispersed in HNBR used as the base polymer of the rubber component (1)): "Zeoforte ZSC 2195H(commercial name)" produced by Zeon Corporation (content of zinc dimethacrylate: 50 parts by mass)
- ZDMA-containing HNBR-B (zinc dimethacrylate was finely dispersed in "Zetpol 2020L(commercial name)" (bound acrylonitrile amount: 36%, Mooney viscosity: 57.5) used as the base polymer of the rubber component (1)): "Zeoforte ZSC 2195H(commercial name)" produced by Zeon Corporation (content of zinc dimethacrylate: 50 parts by mass)
- Zinc dimethacrylate: "Sunester SK-30 (commercial name)" produced by Sanshin Chemical Industry Co., Ltd.
- Methacrylic acid: "MAA (commercial name)" produced by Mitsubishi Rayon Co., Ltd.
- Zinc oxide: "Two kinds of zinc oxide (commercial name)" produced by Mitsui Mining and Smelting Co., Ltd.
- Magnesium oxide: "150ST(commercial name)" produced by Kyowa Chemical Industry Co., Ltd.
- Carbon black: "SEAST ISAF(commercial name)" produced by Tokai Carbon Co., Ltd.
- Age resistor A (p,p'-dicumyldiphenylamine): "Nocluck CD" produced by Ouchishinko Chemical Industry Co., Ltd.)
- Age resistor B (2-mercaptobenzimidazole): "Nocluck MB" produced by Ouchishinko Chemical Industry Co., Ltd.)
- Sulfur-containing compound (diphenyl disulfide): "DPDS (commercial name)" produced by Sumitomo Seika Chemical Co., Ltd..
- Organic peroxide (dicumyl peroxide): "Percumyl D" produced by NOF CORPORATION)

The properties shown in tables 1 through 3 were measured by the following methods:

(1) Tensile strength: Dumbbell specimens No.3 were punched out of the prepared sheet having the thickness of 2mm to measure the tensile strength thereof at a pulling rate of 500mm/minute in accordance with JIS K 6251.
(2) volume swell(%): In accordance with JIS K 6258, the volume swell of each specimen sheet having a dimension of 20mm ×20mm×2mm was computed by means of toluene swelling carried out at 40°C for 24 hours.
(3) Evaluation of cleaning performance: As shown in Fig. 2, spherical polymerized toner (commercially available toner taken out from a commercially available printer produced by Canon) having a small diameter was attached to a horizontally placed glass plate 23 to which OPC (Organic Photo Conductor produced by the present applicant) was applied. The OPC-applied glass plate 23 was slid at 200mm/second, with the cleaning blade 20 of each of the examples and the comparison examples bonded to a supporting member 21 held at an angle of 10 to 50 degrees to the OPC-applied glass plate 23 to observe a toner-scraped state. The test was conducted at a temperature of 23°C and a relative humidity of 55%.
Regarding the cleaning performance, specimens which scraped off all toner were marked by ○. Specimens which left even a small amount of toner on the glass plate 23 were marked by ×.
(4) Evaluation of wear resistance:
The supporting member 21 to which the cleaning blade 20 of each of the examples and the comparison examples was bonded was mounted on an image-forming apparatus rotated at a rotational speed of 200mm/second to 500mm/second. 100,000 sheets of paper were supplied to the image-forming apparatus at a printing concentration of 4% to observe the edge of the cleaning blade 20 after the paper feeding finished. The wear resistance was evaluated by measuring the sectional length of a worn surface (portion Ws) of the edge. The test was conducted at a normal temperature of 23°C and a relative humidity of 55%.
In tables 1 through 3, cleaning blades which had the sectional length of 0 to 5μm were marked by "◎". Cleaning blades which had the sectional length of 5μm to 10μm were marked by "○". Cleaning blades which had the sectional length of 10μm to 50μm were marked by "Δ". Cleaning blades which had the sectional length not less than 50μm were marked by "×".

Examples 1 through 6 and Comparison Examples 1, 2
As shown in table 1, the cleaning blade of the comparison example 1 containing 100 parts by mass of the rubber component (1) and four parts by mass of the zinc dimethacrylate mixed thereinto as the filler (2) had problems in terms of its cleaning performance and wear resistance. The cleaning blade of the comparison example 2 containing 100 parts by mass of the rubber component (1) and 65 parts by mass of the zinc dimethacrylate mixed thereinto as the filler (2) had a volume swell not less than 200% and had problems in terms of its cleaning performance and wear resistance.
The cleaning blades of the examples 1 through 6 containing 100 parts by mass of the rubber component (1) and 5 to 60 parts by mass of the zinc dimethacrylate mixed thereinto as the filler (2) had a tensile strength not less than 10 MPa and a volume swell much less than 200%. Thus the cleaning blades had excellent cleaning performance and wear resistance.
• Examples 7 through 11 and Comparison Examples 3 through 6
As shown in table 2, the cleaning blade of the comparison example 3 containing 100 parts by mass of the rubber component (1) and four parts by mass of the mixture of the methacrylic acid and the zinc oxide, mixed with each other at 1:1, which was mixed thereinto as the filler (2) had a coefficient of volume swell not less than 200% and had problems in terms of its cleaning performance and wear resistance. The cleaning blade of the comparison example 4 containing 100 parts by mass of the rubber component (1) and 70 parts by mass of the mixture of the methacrylic acid and the zinc oxide, mixed with each other at 1:1, which was mixed thereinto as the filler (2) had problems in terms of its cleaning performance and wear resistance.
The cleaning blade of the comparison example 5 in which the zinc dimethacrylate did not function as the co-crosslinking agent was fractured during the measurement of its tensile strength. The cleaning blade of the comparison example 6 in which the zinc dimethacrylate did not function either as the co-crosslinking agent had a volume swell not less than 200% and had problems in terms of its wear resistance.
The cleaning blades of the examples 7 through 11 containing 100 parts by mass of the rubber component (1) and 5 to 60 parts by mass of the mixture of the methacrylic acid and the zinc oxide, mixed with each other at 1:1, which was mixed thereinto as the filler (2) had a tensile strength not less than 10 MPa and a volume swell much less than 200%. Thus the cleaning blades had excellent cleaning performance and wear resistance.
• Examples 12 through 18 and Comparison Examples 7, 8
As shown in table 3, the cleaning blades of the comparison example 7 containing 100 parts by mass of the rubber component (1) and seven parts by mass of the mixture (ZDMA-containing HNBR) of the HNBR serving as the base polymer of the rubber component (1) and the zinc dimethacrylate finely dispersed therein had a volume swell not less than 200% and had problems in terms of its cleaning performance and wear resistance. The cleaning blade of the comparison example 8 containing 100 parts by mass of the rubber component (1) and 80 parts by mass of the

mixture (ZDMA-containing HNBR) of the HNBR and the zinc dimethacrylate finely dispersed therein had problems in terms of its cleaning performance and wear resistance.

In the cleaning blades of the example 12 through 18 containing 100 parts by mass of the rubber component (1) and 10 to 75 parts by mass of the mixture (ZDMA-containing HNBR) of the HNBR serving as the base polymer of the rubber component (1) and the zinc dimethacrylate finely dispersed therein, the mixing amount of the zinc dimethacrylate was 5 to 60 parts by mass with respect to 100 parts by mass of the entire rubber component, the tensile strengths thereof were not less than 10 MPa, and the volume swell were much less than 200%. Thus the cleaning blades had excellent cleaning performance and wear resistance.
Examples 19 through 30 and comparison examples 9 through 15 are shown below.
After the mixing amount of each of the rubber component (1) and the filler (2) shown in tables 4 and 5 was measured, the rubber component (1) and the filler (2) were supplied to the rubber kneading apparatus such as the twin screw extruder, the open roll or the Banbury mixer. Thereafter they were kneaded for five to six minutes while they were being heated at 80˚C to 120˚C.
The obtained mixture and the crosslinking agent (3) were supplied to the rubber kneading apparatus such as the open roll, the Banbury mixer or the kneader. The mixing amount of the crosslinking agent (3) is shown in tables 4 and 5. Thereafter they were kneaded for five to six minutes while they were being heated to 80˚C to 90˚C.
After the obtained rubber composition was set in the die, it was press-vulcanized at 160˚C to 170˚C for 20 to 40 minutes to obtain a sheet having a thickness of 2mm.
After a cleaning blade having a width of 27mm and a length of 320mm was cut out of the sheet having the thickness of 2mm, the cleaning blade was bonded to a supporting member made of chrome-free SECC with hot-melt made of diamond. The central portion of the sheet was cut to obtain a cleaning member.

Table 4

| | | CE9 | CE10 | CE11 | E19 | E20 | E21 | E22 | E23 | E24 |
|---|---|---|---|---|---|---|---|---|---|---|
| Rubber component (1) | NBR | 100 | | | | | | | 60 | |
| | HNBR | | 100 | 65 | | | | | | 60 |
| | XNBR | | | | 100 | 100 | | | 40 | |
| | HXNBR | | | 35 | | | 100 | 100 | | 40 |
| | ART | | | | | | | | | |
| Filler (2) | Methacrylic acid | | | | | | | | | |
| | Zinc oxide | | | | | 5 | | 5 | | |
| | Magnesium oxide | | | | 5 | | 5 | | 5 | 5 |
| | Stearic acid | | | | 1 | 1 | 1 | 1 | 1 | 1 |
| | Carbon black | | | | 20 | 20 | 20 | 20 | 20 | 20 |
| | Age resistor A | | | | 1 | 1 | 1 | 1 | 1 | 1 |
| | Age resistor B | | | | 2 | 2 | 2 | 2 | 2 | 2 |
| | Vulcanization accelerator A | 1.5 | 1.5 | 1.5 | 1.5 | | 1.5 | | 1.5 | 1.5 |
| | Vulcanization accelerator B | 0.5 | 0.5 | 0.5 | 0.5 | | 0.5 | | 0.5 | 0.5 |
| Crosslinking agent (3) | Sulfur | 1.5 | 1.5 | 1.5 | 1.5 | | 1.5 | | 1.5 | 1.5 |
| | Organic peroxide | | | | | 2.4 | | 3.6 | | |
| Tensile strength(MPa) | | 2.1 | 3.5 | 9 | 18 | 21 | 26 | 28 | 15 | 24 |
| Coefficient of cubic expansion(%) | | 350 | 287 | 226 | 128 | 146 | 107 | 115 | 131 | 109 |
| Cleaning performance | | ×× | × | × | ◎ | ○ | ◎ | ○ | ○ | ○ |

(continued)

| | CE9 | CE10 | CE11 | E19 | E20 | E21 | E22 | E23 | E24 |
|---|---|---|---|---|---|---|---|---|---|
| Wear resistance | ×× | × | × | ◎ | ○ | ◎ | ○ | ○ | ○ |
| E and CE in the uppermost column indicate example and comparison example respectively. | | | | | | | | | |

Table 5

| | | CE12 | CE13 | CE14 | CE15 | E25 | E26 | E27 | E28 | E29 | E30 |
|---|---|---|---|---|---|---|---|---|---|---|---|
| Rubber component (1) | NBR | | | 97 | 35 | 90 | 40 | | | | |
| | HNBR | | | | | | | 80 | | | |
| | XNBR | 100 | | | | | | | 80 | | |
| | HXNBR | | 100 | | | | | | | 80 | 80 |
| | ART | | | 3 | 65 | 10 | 60 | 20 | 20 | 20 | 20 |
| Filler (2) | Methacrylic acid | 10 | 10 | | | | | | | | |
| | Zinc oxide | 10 | 10 | | | | | | | | |
| | Magnesium oxide | | | | | | | | | | |
| | Stearic acid | | | | | | | | | | |
| | Carbon black | | | | | 20 | 50 | 20 | 20 | 20 | 20 |
| | Age resistor A | | | | | 1 | 1 | 1 | 1 | 1 | 1 |
| | Age resistor B | | | | | 2 | 2 | 2 | 2 | 2 | 2 |
| | Vulcanization accelerator A | 1.5 | 1.5 | 1.5 | 1.5 | 1.5 | 1.5 | 1.5 | 1.5 | 1.5 | |
| | Vulcanization accelerator B | 0.5 | 0.5 | 0.5 | 0.5 | 0.5 | 0.5 | 0.5 | 0.5 | 0.5 | |
| Crosslinking agent (3) | Sulfur | 1.5 | 1.5 | 1.5 | 1.5 | 1.5 | 1.5 | 1.5 | 1.5 | 1.5 | |
| | Organic peroxide | | | | | | | | | | 3.6 |
| Tensile strength(MPa) | | Rubber burnt and kneading was impossible | | 9 | 3 | 16 | 13 | 22 | 25 | 28 | 31 |
| Coefficient of cubic expansion (%) | | | | 215 | 295 | 158 | 136 | 122 | 125 | 114 | 127 |
| Cleaning performance | | | | × | ×× | ○ | ○ | ○ | ◎ | ◎ | ○ |
| Wear resistance | | | | × | ×× | ○ | ○ | ○ | ◎ | ◎ | ○ |
| E and CE in the uppermost column indicate example and comparison example respectively. | | | | | | | | | | | |

The unit of each of the mixing amount of the rubber component (1), the filler (2), and the crosslinking agent (3) shown in tables 4 and 5 is part by mass.

The following products were used for the components shown in tables 4 and 5:

- NBR (acrylonitrile-butadiene rubber): "N232S (commercial name)" produced by JSR Corporation (bound acrylonitrile amount: 35%)
- HNBR (hydrogenated acrylonitrile-butadiene rubber): HNBR is used as the base polymer of the rubber component (1) ("Zetpol 2010H (commercial name)" produced by Zeon Corporation, bound acrylonitrile amount: 36%, Mooney viscosity: 145).
- XNBR (carboxylated acrylonitrile-butadiene rubber): "Kryrac X7.50(commercial name)" produced by Bayer Co., Ltd.
- HXNBR (carboxylated hydrogenated acrylonitrile-butadiene rubber): "Therban XT VPKA8889(commercial name)" produced by Bayer Co., Ltd.
- ART (hydrogenated acrylonitrile-butadiene rubber into which zinc diacrylate is introduced): "Therban ART VPKA8796(commercial name)" produced by Bayer Co., Ltd.

• Methacrylic acid: "MAA (commercial name)" produced by Mitsubishi Rayon Co., Ltd.
• Stearic acid: "Tsubaki (commercial name)" produced by NOF CORPORATION
• Zinc oxide: "Two kinds of zinc oxide (commercial name)" produced by Mitsui Mining and Smelting Co., Ltd.
• Magnesium oxide: "150ST(commercial name)" produced by Kyowa Chemical Industry Co., Ltd.
• Carbon black: "SEAST ISAF(commercial name)" produced by Tokai Carbon Co., Ltd.
• Age resistor A (p,p'-dicumyldiphenylamine): "Nocluck CD(commercial name)" produced by Ouchishinko Chemical Industry Co., Ltd.)
• Age resistor B (2-mercaptobenzimidazole): "Nocluck MB(commercial name)" produced by Ouchishinko Chemical Industry Co., Ltd.)
• vulcanization accelerator A (dibenzothiazyl disulfide): "Nocceler DM(commercial name)" produced by Ouchishinko Chemical Industry Co., Ltd.)
• vulcanization accelerator B (tetramethylthiuram monosulfide): "Nocceler TS(commercial name)" produced by Ouchishinko Chemical Industry Co., Ltd.)
• Sulfur: powdery sulfur produced by Tsurumi Chemical Industry Co., Ltd.
• Organic peroxide (dicumyl peroxide): "Percumyl D(commercial name)" produced by NOF CORPORATION

Of the properties shown in tables 4 and 5, the tensile strength, the volume swell, and the wear resistance were measured by a method similar to that of the examples 1 through 19 and the comparison examples 1 through 8. Printing was made on 150,000 sheets of paper in the wear resistance test.
The cleaning performance was evaluated by a method described below.

Evaluation of cleaning performance

A blade-shaped sheet having a thickness of 2mm was prepared by punching it and was mounted on a supporting member to form a cleaning member. The cleaning member was mounted on an image-forming apparatus (manufactured by the applicant) in which a photosensitive drum rotates.
The amount of toner per unit area to be supplied to the photoreceptor drum was computed (amount of toner before slip-through) in advance. After printing was made on 150,000 sheets of paper at a density of 4%, the photoreceptor drum was rotated to measure the amount of the toner (amount of toner after slip-through) present on the photoreceptor drum disposed rearward from a cleaning blade when the cleaning blade cleaned. The measured amount of the toner was converted into the amount per unit area to compute the value of the cleaning performance of each cleaning blade in the following conditions.
The test was conducted at a normal temperature of 23°C and a relative humidity of 55%. Spherical polymerized toner having an average diameter of 5 to 10μmm and a spherical degree of 0.90 to 0.99 was used.

(Cleaning performance) = (Amount of toner after slip-through) / (Amount of toner before slip-through)

The cleaning blade having a value below 0.5 has a favorable cleaning performance.
In tables 4 and 5, the cleaning blade having a value below 0.3 was marked by ◎. The cleaning blade having a value more than 0.3 nor more than 0.5 was marked by ○. The cleaning blade having a value more than 0.5 nor more than 0.7 was marked by ×. The cleaning blade having a value more than 0.7 was marked by ××.

Examples 19 through 24 and comparison examples 9 through 11

As shown in table 4, the cleaning blade of each of the comparison examples 9 and 10 which did not contain any of the NBR (XNBR) into which the carboxylic group was introduced, the hydrogenated NBR (HXNBR) into which the carboxylic group was introduced, the methacrylic acid, the zinc oxide, and the magnesium oxide had a tensile of considerably less than 10 Mpa and a volume swell not less than 200%. Thus the cleaning blade of each of the comparison examples 9 and 10 had problems in its cleaning performance and wear resistance. The cleaning blade of the comparison example 11 which contained the hydrogenated NBR (HXNBR) into which the carboxylic group was introduced in a small amount of 3 parts by mass in 100 parts by mass of the rubber component (1) and did not contain the zinc oxide nor the magnesium oxide had a tensile of less than 10 Mpa and a volume swell not less than 200%. Thus the cleaning blade of comparison example 11 had problems in its cleaning performance and wear resistance.
The cleaning blade of each of the examples 19 through 24 contained the acrylonitrile-butadiene rubber into

which the carboxylic group is introduced or the hydrogenated acrylonitrile-butadiene rubber into which the carboxylic group is introduced at 40 to 100 parts by mass in 100 parts by mass of the rubber component (1) and 5 to 60 parts by mass of the zinc oxide or the magnesium oxide with respect to 100 parts by mass of the rubber component (1). Each of the cleaning blades had a tensile of considerably more than 10 MPa and a volume swell not more than 150%. Thus they had excellent cleaning performance and wear resistance.

Examples 25 through 30 and comparison examples 12 through 15

As shown in table 5, in the composition of each of the comparison examples 11 and 12 contained the XNBR or HXNBR, the methacrylic acid, and the zinc oxide, rubber burnt and a kneading operation could not be performed. Thus a cleaning blade could be formed. The cleaning blade of the comparison example 14 which contained the hydrogenated acrylonitrile-butadiene rubber (ART) into which the zinc diacrylate was introduced as the filler in a small amount of 3 parts by mass in 100 parts by mass of the rubber component (1) had a tensile of less than 10 Mpa and a volume swell not less than 200%. Thus the cleaning blade of the comparison example 14 had problems in its cleaning performance and wear resistance. The cleaning blade of the comparison example 15 which contained the ART in a large amount of 65 parts by mass in 100 parts by mass of the rubber component (1) had a tensile as small as 3 MPa and a volume swell not less than 200%. Thus the cleaning blade had problems in its cleaning performance and wear resistance.

Each of the cleaning blades of the examples 25 through 30 contained the hydrogenated acrylonitrile-butadiene rubber (1b) into which the zinc diacrylate was introduced as the filler at 5 to 60 parts by mass in 100 parts by mass of the rubber component (1) had a tensile not less than 10 MPa and a volume swell less than 160%. Thus it had excellent cleaning performance and wear resistance.

## Claims

1. A cleaning blade, for use in an image-forming apparatus, which is formed by molding:

    a thermosetting elastomer composition of any one of the following (A), (B), (C), and (D) each containing acrylonitrile-butadiene rubber as a rubber component (1) thereof and at least one of zinc diacrylate, zinc dimethacrylate, methacrylic acid, zinc oxide, and magnesium oxide as a filler (2) thereof:

    (A): a thermosetting elastomer composition in which as said filler (2), 5 parts by mass to 60 parts by mass of said zinc dimethacrylate (2a) or a mixture (2a) of said methacrylic acid and said zinc oxide is mixed with 100 parts by mass of said rubber component (1),
    (B): a thermosetting elastomer composition comprising hydrogenated acrylonitrile-butadiene rubber (1a), in which said zinc dimethacrylate is dispersed as said filler (2), included at 10 to 75 parts by mass in 100 parts by mass of said rubber component (1),
    (C): a thermosetting elastomer composition in which an acrylonitrile-butadiene rubber into which a carboxylic group is introduced or a hydrogenated acrylonitrile-butadiene rubber into which said carboxylic group is introduced is included at 40 to 100 parts by mass in 100 parts by mass of said rubber component (1), and 0.1 to 20 parts by mass of said zinc oxide or said magnesium oxide is mixed with 100 parts by mass of said rubber component (1) as said filler (2), and
    (D): a thermosetting elastomer composition comprising hydrogenated acrylonitrile-butadiene rubber (1b), into which said zinc diacrylate is introduced as said filler (2), included at 5 to 60 parts by mass in 100 parts by mass of said rubber component (1).

2. The cleaning blade according to claim 1, wherein in said hydrogenated acrylonitrile-butadiene rubber (1a) in which said zinc dimethacrylate dispersed as said filler (2), 91 parts by mass to 115 parts by mass of said zinc dimethacrylate is mixed with 100 parts by mass of said hydrogenated acrylonitrile-butadiene rubber;
    a bound acrylonitrile amount of said hydrogenated acrylonitrile-butadiene rubber is set to 21% to 46%; and
    a Mooney viscosity ML1+4 of said hydrogenated acrylonitrile-butadiene rubber at 100˚C is set to 20 to 160.

3. The cleaning blade according to claim 1, wherein in said hydrogenated acrylonitrile-butadiene rubber (1b) into which said zinc diacrylate is introduced as said filler, said zinc diacrylate is used at 1 to 60 mass%.

4. The cleaning blade according to any one of claims 1 through 3, wherein in addition to said acrylonitrile-butadiene rubber, said rubber component (1) includes natural rubber, butadiene rubber, styrene-butadiene rubber, isoprene rubber, butyl rubber, chloroprene rubber, acrylic rubber, epichlorohydrin rubber, ethylene propylene rubber, ethylene-propylene-diene copolymer rubber or a mixture of two or more of said rubber components.

**5.** The cleaning blade according to any one of claims 1 through 4, wherein said acrylonitrile-butadiene rubber of each of said thermosetting elastomer compositions (A) and (B) includes acrylonitrile-butadiene rubber or/and hydrogenated acrylonitrile-butadiene rubber.

**6.** The cleaning blade according to any one of claims 1 through 5, wherein in said acrylonitrile-butadiene rubber of said thermosetting elastomer composition (C) or/and said hydrogenated acrylonitrile-butadiene rubber of said thermosetting elastomer composition (C) into which said carboxylic group is introduced, a content ratio of said carboxylic group is set to 0.5 to 30 mass%.

**7.** The cleaning blade according to any one of claims 1 through 6, wherein said thermosetting elastomer composition contains:

one or more kinds of fillers (2) selected from a group of fillers (2b) including a co-crosslinking agent, a vulcanization accelerator, a vulcanization-accelerating assistant, an age resistor, a softener for rubber, a reinforcing agent, and other kinds of additives; and
a crosslinking agent (3) such as sulfur, an organic sulfur-containing compound, an organic peroxide, a heat-resistant crosslinking agent, and a resin crosslinking agent.

**8.** The cleaning blade according to claim 7, wherein 0.1 parts by mass to 20 parts by mass of said filler (2b) is mixed with 100 parts by mass of said rubber component (1); and 0.1 parts by mass to 30 parts by mass of said crosslinking agent (3) is mixed with 100 parts by mass of said rubber component (1).

**9.** The cleaning blade according to claim 7 or 8, wherein 0.1 to 15 parts by mass of said age resistor is mixed with 100 parts by mass of said rubber component (1).

**10.** The cleaning blade, according to any one of claims 1 through 9, formed by molding said thermosetting elastomer composition having a tensile strength of not less than 10 MPa and a volume swell of not more than 200%.

## Patentansprüche

**1.** Reinigungsklinge zur Verwendung in einer Bild erzeugenden Vorrichtung, welche geformt worden ist durch Formen:

einer duroplastischen Elstomerzusammensetzung aus irgendeinem der nachfolgenden (A), (B), (C) und (D), welcher jeweils Acrylnitrilbutadienkautschuk als eine Kautschukkomponente (1) hiervon sowie wenigstens eines von Zinkdiacrylat, Zinkdimethacrylat, Methacrylsäure, Zinkoxid und Magnesiumoxid als ein Füllstoff (2) hiervon enthält, wobei:

(A): eine duroplastische Elastomerzusammensetzung ist, in welcher 5 Massenteile bis 60 Massenteile des Zinkdimethacrylats (2a) oder einer Mischung (2a) der Methacrylsäure und des Zinkoxids als der Füllstoff (2) mit 100 Massenteilen der Kautschukkomponente (1) vermischt sind,
(B): eine duroplastische Elastomerzusammensetzung ist, welche hydrierten Acrylnitrilbutadienkautschuk (1a) enthält, in dem das Zinkdimethacrylat als der Füllstoff (2) dispergiert ist, wobei dieses mit 10 bis 75 Massenteilen in 100 Massenteilen der Kautschukkomponente (1) enthalten ist,
(C): eine duroplastische Elastomerzusammensetzung ist, in welcher ein Acrylnitrilbutadienkautschuk, in den eine Carboxylgruppe eingeführt worden ist, oder ein hydrierter Acrylnitrilbutadienkautschuk, in den die Carboxylgruppe eingeführt worden ist, in 40 bis 100 Massenteilen in 100 Massenteilen der Kautschukkomponente (1) enthalten ist, und in welcher 0,1 bis 20 Massenteile des Zinkoxids oder des Magnesiumoxids als der Füllstoff (2) mit 100 Massenteilen der Kautschukkomponente (1) vermischt sind, und
(D): eine duroplastische Elastomerzusammensetzung ist, welche hydrierten Acrylnitrilbutadienkautschuk (1b) enthält, in den das Zinkdiacrylat als der Füllstoff (2) enthalten in einer Menge von 5 bis 60 Massenteilen in 100 Massenteilen der Kautschukkomponente (1) eingeführt worden ist.

**2.** Reinigungsklinge nach Anspruch 1, wobei in dem hydrierten Acrylnitrilbutadienkautschuk (1a), in dem das Zinkdimethacrylat als der Füllstoff (2) dispergiert ist, 91 Massenteile bis 115 Massenteile des Zinkdimethacrylats mit 100 Massenteilen des hydrierten Acrylnitrilbutadienkautschuks vermischt sind,

wobei die gebundene Acrylnitrilmenge des hydrierten Acrylnitrilbutadienkautschuks auf 21 % bis 46 % eingestellt ist, und
wobei die Mooney-Viskosität ML1+4 des hydrierten Acrylnitrilbutadienkautschuks bei 100 ˚C auf 20 bis 160 eingestellt ist.

**3.** Reinigungsklinge nach Anspruch 1, wobei das Zinkdiacrylat in dem hydrierten Acrylnitrilbutadienkautschuk (1b), in welchen das Zinkdiacrylat als der Füllstoff eingeführt worden ist, mit 1 bis 60 Massen-% verwendet worden ist.

**4.** Reinigungsklinge nach einem der Ansprüche 1 bis 3, wobei die Kautschukkomponente (1), zusätzlich zu dem Acrylnitrilbutadienkautschuk, Naturkautschuk, Butadienkautschuk, Styrolbutadienkautschuk, Isoprenkautschuk, Butylkautschuk, Chloroprenkautschuk, Acrylkautschuk, Epichlorhydrinkautschuk, Ethylenpropylenkautschuk, Ethylen-Propylen-Dien-Copolymerkautschuk oder eine Mischung von zwei oder mehr der Kautschukkomponenten enthält.

**5.** Reinigungsklinge nach einem der Ansprüche 1 bis 4, wobei der Acrylnitrilbutadienkautschuk von jeder der duroplastischen Elastomerzusammensetzungen (A) und (B) Acrylnitrilbutadienkautschuk und/oder hydrierten Acrylnitrilbutadienkautschuk enthält.

**6.** Reinigungsklinge nach einem der Ansprüche 1 bis 5, wobei das Mengenverhältnis der Carboxylgruppe in dem Acrylnitrilbutadienkautschuk der duroplastischen Elastomerzusammensetzung (C) und/oder in dem hydrierten Acrylnitrilbutadienkautschuk der duroplastischen Elastomerzusammensetzung (C), in welchen die Carboxylgruppe eingeführt worden ist, auf 0,5 bis 30 Massen-% eingestellt ist.

**7.** Reinigungsklinge nach einem der Ansprüche 1 bis 6, wobei die duroplastische Elstomerzusammensetzung enthält:

ein oder mehrere Arten von Füllstoffen (2) ausgewählt aus der Gruppe von Füllstoffen (2b) umfassend ein Covernetzungsmittel, einen Vulkanisationsbeschleuniger, ein Vulkanisation beschleunigendes Hilfsmittel, ein Alterungswiderstandsmittel, ein Erweichungsmittel für Kautschuk, ein Verstärkungsmittel und andere Arten von Additiven sowie
ein Vernetzungsmittel (3), wie beispielsweise Schwefel, eine Schwefel enthaltende organische Verbindung, ein organisches Peroxid, ein wärmeresistentes Vernetzungsmittel und ein Harzvernetzungsmittel.

**8.** Reinigungsklinge nach Anspruch 7, wobei 0,1 Massenteile bis 20 Massenteile des Füllstoffs (2b) mit 100 Massenteilen der Kautschukkomponente (1) vermischt sind und 0,1 Massenteile bis 30 Massenteile des Vernetzungsmittels (3) mit 100 Massenteilen der Kautschukkomponente (1) vermischt sind.

**9.** Reinigungsklinge nach Anspruch 7 oder 8, wobei 0,1 bis 15 Massenteile des Alterungswiderstandsmittels mit 100 Massenteilen der Kautschukkomponente (1) vermischt sind.

**10.** Reinigungsklinge nach einem der Ansprüche 1 bis 9, geformt durch Formen der duroplastischen Elastomerzusammensetzung mit einer Zugfestigkeit von nicht weniger als 10 MPa und mit einer Volumenanschwellung von nicht mehr als 200 %.

## Revendications

**1.** Lame de nettoyage, pour utilisation dans un appareil de formation d'images, qui est formée en moulant :

une composition d'élastomère thermodurcissable de l'une quelconque des compositions (A), (B), (C) et (D) suivantes contenant chacune un caoutchouc acrylonitrile-butadiène en tant que composant de caoutchouc (1) de celui-ci et au moins l'un parmi le diacrylate de zinc, le diméthacrylate de zinc, l'acide méthacrylique, l'oxyde de zinc et l'oxyde de magnésium en tant que charge (2) de ceux-ci :

(A) : une composition d'élastomère thermodurcissable dans laquelle en tant que charge (2), 5 parties en masse à 60 parties en masse dudit méthacrylate de zinc (2a) ou un mélange (2a) dudit acide méthacrylique et dudit oxyde de zinc sont mélangés avec 100 parties en masse dudit composant de caoutchouc (1),
(B) : une composition d'élastomère thermodurcissable comprenant un caoutchouc acrylonitrile-butadiène hydrogéné (1a), dans lequel ledit diméthacrylate de zinc est dispersé en tant que ladite charge (2), inclus

à 10 à 75 parties en masse dans 100 parties en masse dudit composant de caoutchouc (1),
(C) : une composition d'élastomère thermodurcissable dans laquelle un caoutchouc acrylonitrile-butadiène dans lequel un groupe carboxylique est introduit ou un caoutchouc acrylonitrile-butadiène hydrogéné dans lequel ledit groupe carboxylique est introduit est inclus à 40 à 100 parties en masse dans 100 parties en masse dudit composant de caoutchouc (1), et 0,1 à 20 parties en masse dudit oxyde de zinc ou dudit oxyde de magnésium sont mélangées avec 100 parties en masse dudit composant de caoutchouc (1) en tant que ladite charge (2), et
(D) : une composition d'élastomère thermodurcissable comprenant un caoutchouc acrylonitrile-butadiène hydrogéné (1b), dans laquelle ledit diacrylate de zinc est introduit en tant que ladite charge (2), incluse à 5 à 60 parties en masse dans 100 parties en masse dudit composant de caoutchouc (1).

**2.** Lame de nettoyage selon la revendication 1, dans laquelle dans ledit caoutchouc acrylonitrile-butadiène hydrogéné (1a) dans lequel ledit diméthacrylate de zinc est dispersé en tant que ladite charge (2), 91 parties en masse à 115 parties en masse dudit diméthacrylate de zinc sont mélangées avec 100 parties en masse dudit caoutchouc acrylonitrile-butadiène hydrogéné ;
une quantité d'acrylonitrile lié dudit caoutchouc acrylonitrile-butadiène hydrogéné est fixée à 2 1 % à 46 % ; et une consistance Mooney ML1+4 dudit caoutchouc acrylonitrile-butadiène hydrogéné à 100 °C est fixée à 20 à 160.

**3.** Lame de nettoyage selon la revendication 1, dans laquelle dans ledit caoutchouc acrylonitrile-butadiène hydrogéné (1b) dans lequel ledit diacrylate de zinc est introduit en tant que ladite charge, ledit diacrylate de zinc est utilisé à 1 à 60 % en masse.

**4.** Lame de nettoyage selon l'une quelconque des revendications 1 à 3, dans laquelle en plus dudit caoutchouc acrylonitrile-butadiène, ledit composant de caoutchouc (1) comprend du caoutchouc naturel, du caoutchouc butadiène, du caoutchouc styrène-butadiène, du caoutchouc isoprène, du caoutchouc butyle, du caoutchouc chloroprène, du caoutchouc acrylique, du caoutchouc épichlorhydrine, du caoutchouc éthylène-propylène, du caoutchouc de copolymère éthylène-propylène-diène ou un mélange de deux ou plus desdits composants de caoutchouc.

**5.** Lame de nettoyage selon l'une quelconque des revendications 1 à 4, dans laquelle ledit caoutchouc acrylonitrile-butadiène de chacune desdites compositions d'élastomère thermodurcissable (A) et (B) comprend du caoutchouc acrylonitrile-butadiène et/ou du caoutchouc acrylonitrile-butadiène hydrogéné.

**6.** Lame de nettoyage selon l'une quelconque des revendications 1 à 5, dans laquelle dans ledit caoutchouc acrylonitrile-butadiène de ladite composition d'élastomère thermodurcissable (C) ou/et ledit caoutchouc acrylonitrile-butadiène hydrogéné de ladite composition d'élastomère thermodurcissable (C) dans laquelle ledit groupe carboxylique est introduit, un rapport en teneur dudit groupe carboxylique est fixé à 0,5 à 30 % en masse.

**7.** Lame de nettoyage selon l'une quelconque des revendications 1 à 6, dans laquelle ladite composition d'élastomère thermodurcissable contient :

un ou plusieurs types de charges (2) choisies parmi un groupe de charges (2b) comprenant un agent de coréticulation, un accélérateur de vulcanisation, un assistant d'accélération de vulcanisation, un anti vieillisseur, un plastifiant pour caoutchouc, un agent renforçant et d'autres types d'additifs ; et
un agent de réticulation (3) tel que du soufre, un composé contenant du soufre organique, un peroxyde organique, un agent de réticulation résistant à la chaleur et un agent de réticulation de résine.

**8.** Lame de nettoyage selon la revendication 7, dans laquelle 0,1 partie en masse à 20 parties en masse de ladite charge (2b) sont mélangées avec 100 parties en masse dudit composant de caoutchouc (1) ; et 0,1 partie en masse à 30 parties en masse dudit agent de réticulation (3) sont mélangées avec 100 parties en masse dudit composant de caoutchouc (1).

**9.** Lame de nettoyage selon la revendication 7 ou 8, dans laquelle 0,1 à 15 parties en masse dudit anti vieillisseur sont mélangées avec 100 parties en masse dudit composant de caoutchouc (1).

**10.** Lame de nettoyage, selon l'une quelconque des revendications 1 à 9, formée en moulant ladite composition d'élastomère thermodurcissable ayant une résistance à la traction non inférieure à 10 MPa et un gonflement non supérieur à 200 %.

Fig. 1

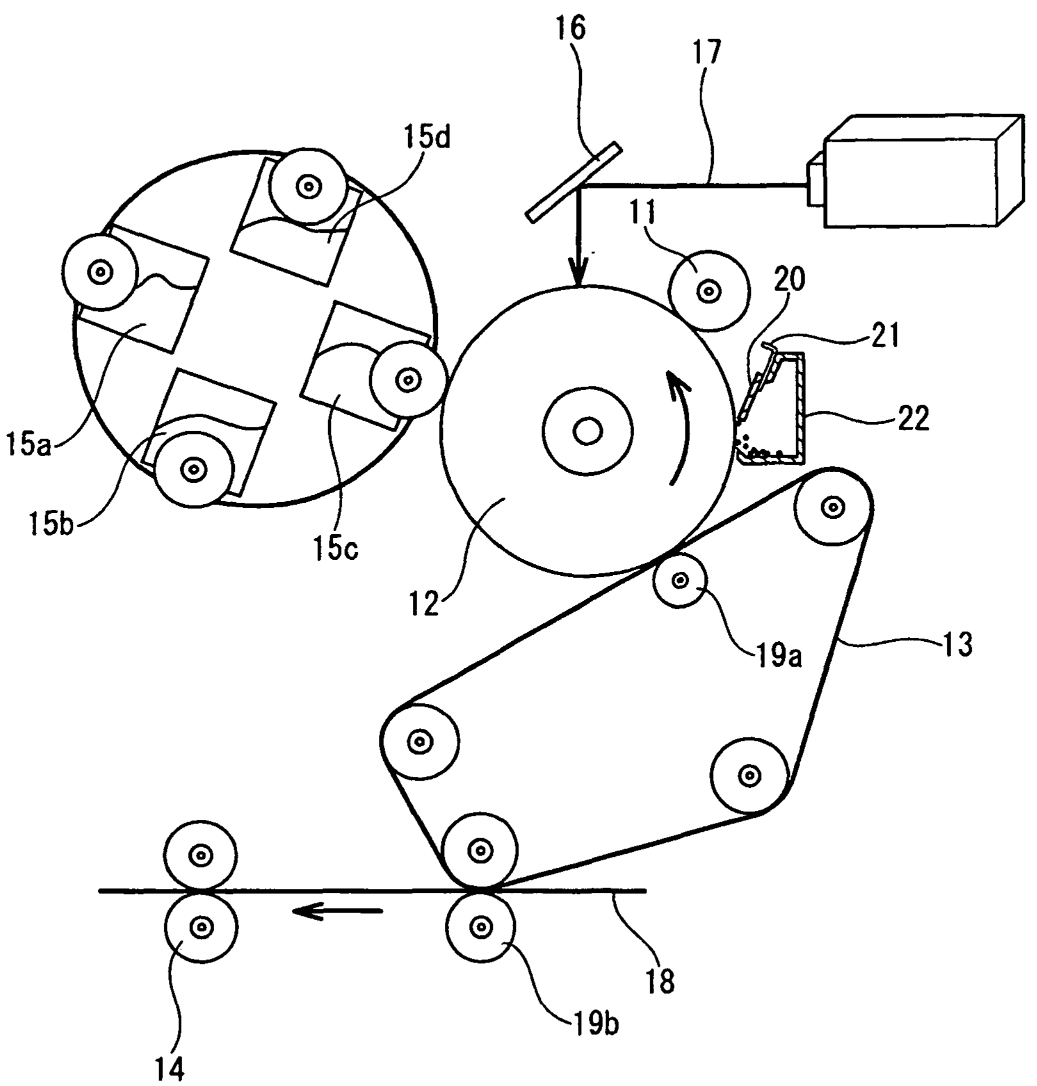

Fig. 2

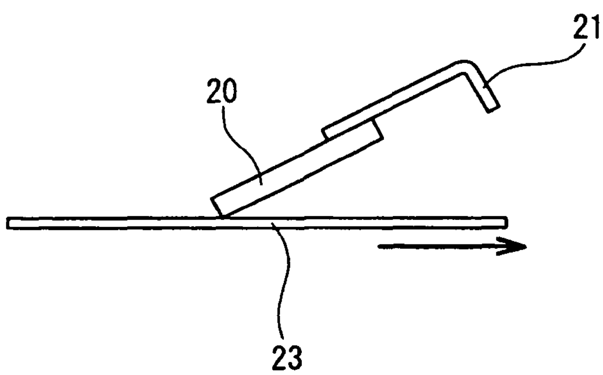

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003248404 A
- JP 9160380 A
- JP 2005047174 A
- US 6043308 A